# EUROPEAN PATENT APPLICATION

(11) **EP 4 628 811 A1**
(43) Date of publication of application: **08.10.2025**
(21) Application number: 24764183.0
(22) Date of filing: 28.02.2024
(51) Int. Cl.: F24F 12/00, F24F 7/003, F24F 13/28, F24F 11/70, F24F 11/00, F24F 13/20, F24F 13/10, B01D 53/04, B01D 53/62, B01D 39/20

(54) **AIR CONDITIONING APPARATUS FOR CARBON DIOXIDE ADSORPTION, AND METHOD THEREFOR**

(30) Priority: 28.02.2023 KR 20230027254; 17.03.2023 KR 20230035185
(71) Applicant: Samsung Electronics Co., Ltd., Suwon-si, Gyeonggi-do 16677 (KR); Korea University Research and Business Foundation, Seoul 02841 (KR)
(72) Inventor: LEE, Minkyung, Suwon-si Gyeonggi-do 16677 (KR); KANG, Yongtae, Seoul 06346 (KR); KIM, Kwangjoo, Suwon-si Gyeonggi-do 16677 (KR); KOH, Youngdeog, Suwon-si Gyeonggi-do 16677 (KR); KIM, Minjae, Seoul 02574 (KR); KIM, Seonggon, Seoul 07022 (KR); LEE, Jaewon, Seoul 02583 (KR)
(74) Representative: Gulde & Partner
(86) International application number: PCT/KR2024/002555
(87) International publication number: WO 2024/181784

(57) **Abstract**

The present invention relates to an air conditioning apparatus for reducing an indoor carbon dioxide concentration by means of a carbon dioxide adsorption filter, and a method therefor. The air conditioning apparatus may have a first suction port and a first discharge port on one side thereof facing indoors, and a second suction port and a second discharge port on the other side facing outdoors. The air conditioning apparatus may comprise a main body configured to form an air passage from the first suction port to either the first discharge port or the second discharge port. The main body may comprise a carbon dioxide adsorption filter provided in a common section of a first air passage connecting the first suction port and the first discharge port and a second air passage connecting the first suction port and the second discharge port. The main body may comprise a heater configured to heat the carbon dioxide adsorption filter to a predetermined temperature.

## Description

### [Technical Field]

The disclosure relates to an air conditioning device and method for reducing indoor carbon dioxide concentration through a carbon dioxide suction filter.

### [Background Art]

Air conditioning devices, such as air purifiers or ventilators, may be used to control indoor air quality. The air conditioning device may be referred to as a heat recovery ventilator (ERV) or a total heat exchanger. In the air conditioning device, heat exchange may occur between air discharged from indoors to outdoors and air introduced from outdoors to indoors.

The air conditioning device may have a filter applied therein to remove harmful substances. The type of filter applied to the air conditioning device may vary depending on the object to be removed, such asparticulate matter, yellow dust, pollen, or bacteria.

In closed spaces, such as indoors, a high concentration of carbon dioxide (CO₂) may be harmful to the human body. For example, breathing and cooking in a closed space may increase the indoor carbon dioxide concentration. If a person is continuously exposed to a high concentration of carbon dioxide, he or she may feel discomfort, poor concentration, or headaches. The average concentration of carbon dioxide outdoors is about 400 to 500 ppm (parts per million), and the optimal concentration of carbon dioxide indoors is 1000 ppm.

Ventilation may reduce indoor carbon dioxide concentration by circulating outdoor and indoor air. However, energy loss occurs during ventilation, requiring cooling or heating.

Accordingly, the air conditioning device may lower the concentration of indoor carbon dioxide by applying a filter for removing carbon dioxide therein. As an example, a filter mounted on the air conditioning device may suction carbon dioxide and reduce the indoor carbon dioxide concentration.

### [Detailed Description of the Invention]

### [Technical Problem]

One embodiment of the disclosure may provide an air conditioning device that removes carbon dioxide suctioned by a filter in a passage discharging indoor air to the outside using a low-temperature heat source.

### [Technical Solution]

An air conditioning device according to an embodiment of the disclosure may comprise a main body. The air conditioning device may be provided with a first intake port and a first discharge port on one side facing inwards. The air conditioning device may be provided with a second intake port and a second discharge port on another side facing outdoors. The air conditioning device may comprise the main body configured to form an air passage from the first intake port to either the first discharge port or the second discharge port based on an operation state. The main body may include a carbon dioxide suction filter provided in a section where a first air passage connecting the first intake port and the first discharge port and a second air passage connecting the first intake port and the second discharge port are common. The main body may include a heater configured to heat the carbon dioxide suction filter to a predetermined temperature in a ventilation operation state in which indoor air is discharged outdoors and outdoor air is supplied indoors.

A method for operating an air conditioning device according to an embodiment of the disclosure may include determining an operation type, selecting a ventilation operation for discharging indoor air and supplying outdoor air among operation types, heating a carbon dioxide suction filter to a predetermined temperature, discharging the indoor air outdoors, and supplying the outdoor air indoors.

### [Advantageous Effects]

According to an embodiment of the disclosure, it is possible to enhance indoor air quality by removing indoor carbon dioxide through a filter to which a carbon dioxide adsorbent is applied in an air conditioning device and to desorbed carbon dioxide adsorbed to the filter by a heat source in a lower-temperature area to reproduce the filter and accordingly enable continuous use.

The technical objects of the disclosure are not limited to the foregoing, and other technical objects may be derived by one of ordinary skill in the art from example embodiments of the disclosure.

Effects of the present invention are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

### [Brief Description of the Drawings]

FIG. 1 is a perspective view illustrating an air conditioning device according to an embodiment of the disclosure;
FIG. 2 is a block diagram illustrating an air conditioning device according to an embodiment of the disclosure;
FIG. 3 is a front view illustrating an air conditioning device according to an embodiment of the disclosure;
FIG. 4 is a flowchart illustrating control for selecting an operation type of an air conditioning device according to an embodiment of the disclosure;
FIG. 5 is a flowchart illustrating a subroutine for a circulation operation in an air conditioning device according to an embodiment of the disclosure;
FIG. 6 illustrates an air flow during a circulation operation in an air conditioning device according to an embodiment of the disclosure;
FIG. 7 is a flowchart illustrating control of a subroutine for a circulation operation in an air conditioning device according to an embodiment of the disclosure;
FIG. 8 illustrates an air flow during a ventilation operation in an air conditioning device according to an embodiment of the disclosure;
FIG. 9A illustrates an air flow for removing carbon dioxide adsorbed to a filter during a ventilation operation in an air conditioning device according to an embodiment of the disclosure;
FIG. 9B illustrates an air flow for removing carbon dioxide adsorbed to a filter during a ventilation operation in an air conditioning device according to an embodiment of the disclosure;
FIG. 10 is a flowchart illustrating control of a subroutine for operating an automatic mode in an air conditioning device according to an embodiment of the disclosure; and
FIG. 11 is a front view illustrating that indoor air is discharged outdoors through a bypass path in an air conditioning device according to an embodiment of the disclosure.

The same or similar reference denotations may be used to refer to the same or similar elements throughout the specification and the drawings.

### [Mode for Carrying out the Invention]

Embodiments of the present invention are now described with reference to the accompanying drawings in such a detailed manner as to be easily practiced by one of ordinary skill in the art to which the disclosure pertains (hereinafter, referred to as 'one of ordinary skill in the art'). However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

For use in embodiments of the disclosure, common terms widely used as possible have been chosen considering functions in the disclosure, but the terms may be varied depending on the intent of one of ordinary skill in the art or case laws or the advent of new technologies. Accordingly, the terms used herein should be determined based on their meanings and the overall disclosure, rather than by the terms themselves.

In various embodiments of the disclosure, when an element "includes" another element, the element may further include the other element, rather excluding the other element, unless particularly stated otherwise.

Hereinafter, the terms used in the disclosure are previously defined as follows.

Outdoor air (OA) is air present outdoors and refers to outdoor air before being introduced into the air conditioning device.

Indoor air (or return air (RA)) is air present indoors and refers to indoor air that is required to be ventilated and is to be introduced into the air conditioning device.

Exhaust air (EA) refers to air discharged from indoors to outdoors through the air conditioning device.

Supply air (SA) refers to air supplied indoors through the air conditioning device. The supply air may include outdoor air that is supplied indoors through the air conditioning device and indoor air that is circulated indoors through the air conditioning device.

The terms "x-axis direction", "y-axis direction", and "z-axis direction" used in the following description are defined with reference to the drawings for convenience of description, and the shape and position of each component are not limited by these terms.

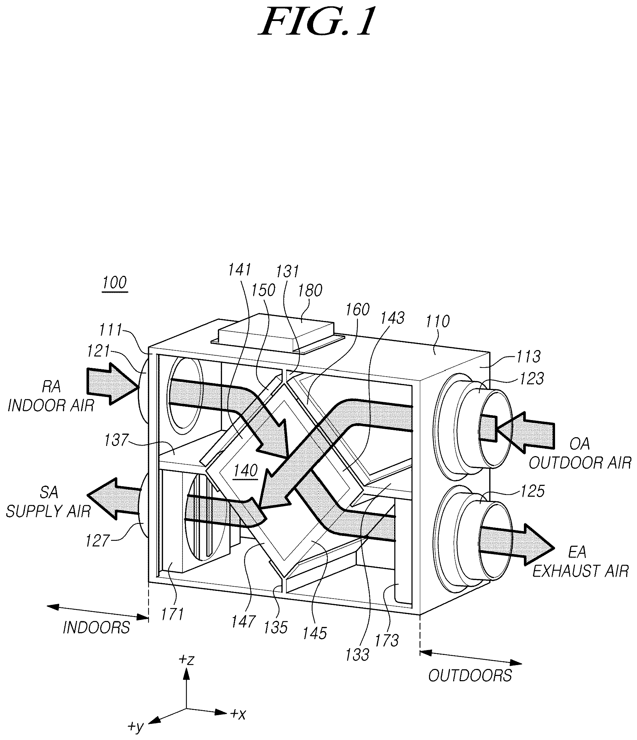

FIG. 1 is a perspective view of an air conditioning device 100 according to an embodiment of the disclosure.

Referring to FIG. 1, the air conditioning device 100 may include a ventilation device such as a (waste) energy recovery ventilator or a total heat exchanger. Further, the air conditioning device 100 may be applied to various devices including air purifiers or air conditioners to purify or circulate air. In the disclosure, the air conditioning device 100 is described as being specific to the ERV, but may be applied to various devices.

According to an embodiment, when the air conditioning device 100 is viewed from the front side to the rear side (-y-axis direction), the directions of the air conditioning device 100 may be defined as follows. For example, the +x-axis direction may be defined as a right direction of the air conditioning device 100, and the -x-axis direction may be defined as a left direction of the air conditioning device 100. For example, the +y-axis direction may be defined as a front direction of the air conditioning device 100, and the -y-axis direction may be defined as a rear direction of the air conditioning device 100. For example, the +z-axis direction may be defined as an upper direction of the air conditioning device 100, and the -z-axis direction may be defined as a lower direction of the air conditioning device 100.

The air conditioning device 100 may include a main body 110. The main body 110 may form an outer appearance of the air conditioning device 100. Components included in the air conditioning device 100 may be installed in the main body 110.

According to an embodiment of the disclosure, the air conditioning device 100 may be installed so that the left side faces indoors and the right side faces outdoors with respect to the main body 110.

The air conditioning device 100 may be provided with a passage for introducing or discharging outdoor air and indoor air. For example, the air conditioning device 100 may include one or more first intake ports 121 for introducing indoor air. For example, the air conditioning device 100 may include one or more second intake ports 123 for introducing outdoor air. For example, the air conditioning device 100 may include one or more first discharge ports 127 for supplying air indoors. For example, the air conditioning device 100 may include one or more second discharge ports 125 for discharging air outdoors. The one or more first intake ports 121 or the one or more first discharge ports 127 may be provided on a first side 111 corresponding to the left side of the main body 110. The one or more second intake ports 123 or the one or more second discharge ports 125 may be provided on a second side 113 corresponding to the right side of the main body 110.

As illustrated, the one or more first intake ports 121 or the one or more first discharge ports 127 may not be disposed on the same side. The one or more second intake ports 123 or the one or more second discharge ports 125 may not be disposed on the same side.

For example, the one or more first intake ports 121 may be provided on the first side 111 that is the left side, and the one or more first discharge ports 127 may be provided on the upper side. Conversely, the one or more first intake ports 121 may be provided on the upper side, and the one or more first discharge ports 127 may be provided on the first side 111 that is the left side.

For example, the one or more second intake ports 123 may be provided on the second side 113 that is the right side, and the one or more second discharge ports 125 may be provided on the upper side. Conversely, the one or more second intake ports 123 may be provided on the upper side, and the one or more second discharge ports 125 may be provided on the second side 113 which is the right side.

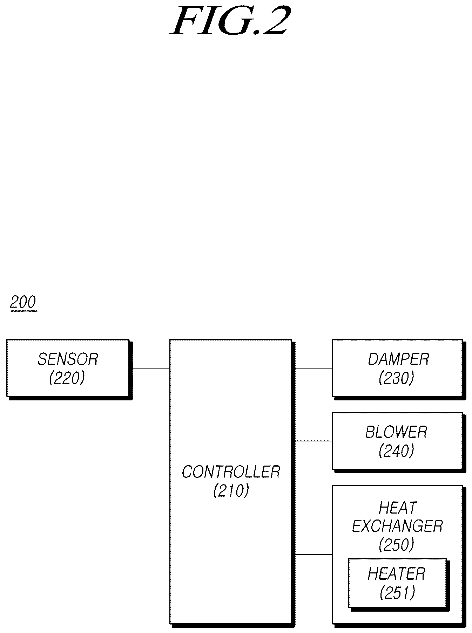

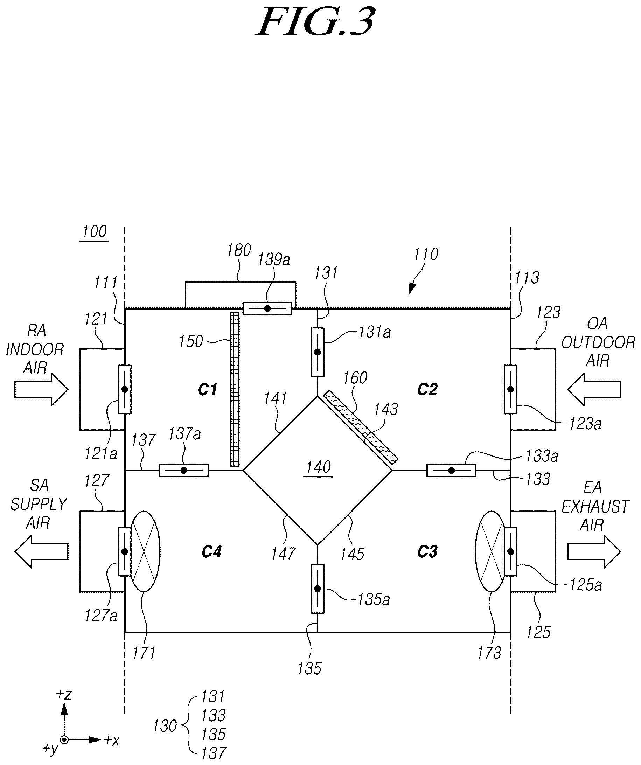

According to an embodiment, the air conditioning device 100 may include a damper (not shown) (e.g., the damper 230 of FIG. 2) to flow the outdoor air OA and the indoor air. The damper 230 may be implemented as a valve or an orifice. The damper 230 may include, e.g., a first damper (e.g., the first damper 121a of FIG. 3), a second damper (e.g., the second damper 123a of FIG. 3), a third damper (e.g., the third damper 125a of FIG. 3), or a fourth damper (e.g., the fourth damper 127a of FIG. 3). The air conditioning device 100 may selectively open or close the plurality of dampers 121a, 123a, 125a, and 127a included in the damper 230 to form an air flow. The damper 230 may be provided near the intake ports 121 and 123 or the discharge ports 125 and 127. The damper 230 is described below in detail with reference to FIG. 3.

The air conditioning device 100 may exchange outdoor air and indoor air. The air conditioning device 100 may exchange thermal energy of the outdoor air with thermal energy of the indoor air. For example, the air conditioning device 100 may include a heat exchanger 140.

The air conditioning device 100 may discharge the contaminated indoor air RA outdoors and supply the outdoor air OA indoors. For example, the air conditioning device 100 may purify the outdoor air OA and supply the purified outdoor air OA indoors. The air conditioning device 100 may include at least one filter 150 or 160 to purify the outdoor air.

According to an embodiment, the at least one filter 150 or 160 included in the air conditioning device 100 may include a first filter 150. The at least one filter 150 or 160 may include a second filter 160. The at least one filter 150 or 160 may include the first filter 150 and the second filter 160. The at least one filter 150 or 160 may include a filter casing forming an external appearance and an adsorbent. The performance or adsorption material of the at least one filter 150 or 160 may be determined according to the material or constituent materials of the adsorbent.

For example, the first filter 150 may be provided to adsorb carbon dioxide. The first filter 150 may be provided at a predetermined point in a section in which the first air passage through which the indoor air RA is introduced into the air conditioning device 100 and supplied as the supply air SA and the second air passage through which the indoor air RA is discharged as the exhaust air EA are common. The first filter 150 may be provided, e.g., on the surface of the heat exchanger 140. The first filter 150 may be provided on a surface of the first plate 141 of the heat exchanger 140. Although not shown, the first filter 150 may be provided on the surface of the third plate 145 of the heat exchanger 140.

For example, the second filter 160 may be provided to adsorb harmful substances. The second filter 160 may be provided on a third air passage through which outdoor air OA is introduced into the air conditioning device 100 and supplied as the supply air SA. The second filter 160 may be provided, e.g., on the surface of the heat exchanger 140. The second filter 160 may be provided on the surface of the second plate 143 of the heat exchanger 140. Although not shown, the second filter 160 may be provided on the surface of the fourth plate 147 of the heat exchanger 140.

The air conditioning device 100 may include at least one blower 171 and 173. The at least one blower 171 or 173 may be provided to control the flow of air inside the air conditioning device 100. The at least one blower 171 or 173 may include, e.g., a first blower 171 forming a flow of air for discharging air indoors. The at least one blower 171 or 173 may include, e.g., a second blower 173 forming a flow of air for discharging air outdoors.

The air conditioning device 100 may include a power supply unit 180. The power supply unit 180 may be provided to supply driving power of the air conditioning device 100. For example, the power supply unit 180 may supply power required for driving the heat exchanger 140. For example, the power supply unit 180 may supply power required to open or close the damper 130. For example, the power supply unit 180 may supply power required for driving the at least one blower 171 or 173. Further, the power supply unit 180 may supply power necessary for driving the air conditioning device 100.

FIG. 2 is a block diagram of an air conditioning device 200 (e.g., the air conditioning device 100 of FIG. 1) according to an embodiment of the disclosure.

Referring to FIG. 2, the air conditioning device 200 may include a controller 210, a sensor 220, a damper 230, a blower 240, or a heat exchanger 250. The heat exchanger 250 may include a heater 251. Further, the air conditioning device 200 may further include or omit components as necessary.

The sensor 220 may detect a state inside or outside the air conditioning device 200. The sensor 220 may detect temperature or humidity inside or outside the air conditioning device 200. The sensor 220 may detect the concentration of gas inside or outside the air conditioning device 200. The sensor 220 may transmit the detected information to the controller 210.

For example, the sensor 220 may include at least one sensor. The at least one sensor may include a temperature sensor, a humidity sensor, or a gas sensor. The temperature sensor may detect an indoor temperature. The humidity sensor may detect indoor humidity.

For example, the sensor 220 may include a temperature sensor. The temperature sensor may be provided to detect an indoor temperature or a temperature of a carbon dioxide adsorption filter (e.g., the first filter 150 of FIG. 3).

For example, the sensor 220 may include a gas sensor. The gas sensor may detect the concentration of a specific gas. The gas sensor may detect the concentration of, e.g., carbon dioxide (CO₂), carbon monoxide (CO), hydrogen sulfide (H₂S), ammonia (NH₃), hydrocarbon (CₓH_{y}), nitrogen oxides (NOₓ), and radon. Hereinafter, in the description of the disclosure, the sensor unit 120 is limited to a gas sensor that detects carbon dioxide.

According to an embodiment, the sensor 120 may detect the concentration of carbon dioxide present in indoor air. The outdoor average concentration of carbon dioxide corresponds to, e.g., 400 to 500 ppm (parts per million, 10⁻⁶ g/g), and the indoor appropriate concentration of carbon dioxide is recommended to be, e.g., 1000 ppm or less. If the human body is continuously exposed to the concentration of 1000 ppm carbon dioxide, he or she may cause discomfort, decreased concentration, or headache. Information about the indoor carbon dioxide concentration detected by the sensor unit 120 may be transmitted to the controller 210.

According to an embodiment of the disclosure, the sensor 220 may detect the concentration of carbon dioxide present in the filter (e.g., the carbon dioxide adsorption filter) provided in the air conditioning device 200. The sensor 220 may transmit the detected carbon dioxide concentration information to the controller 210.

The damper 230 may be provided to flow outdoor air or indoor air passing through the air conditioning device 200. The damper 230 may be opened or closed to pass gas (e.g., air). In addition to the damper, the damper 230 may be implemented as a valve or an orifice.

According to an embodiment of the disclosure, the damper 230 may be opened or closed by a signal transmitted from the controller 210. For example, the controller 210 may transmit a signal for opening or closing the damper 230. The damper 230 may obtain the signal and alternately perform an opening or closing operation. To that end, the damper 230 may be configured as a toggle switch or may include a toggle switch.

According to an embodiment of the disclosure, the damper 230 may include at least one damper. The damper 230 may be provided in a passage through which outdoor air or indoor air enters and exits. The damper 230 may be provided on a partition wall 133 to allow gas to enter and exit the partition (e.g., the second partition wall 133 of FIG. 3) partitioning the air conditioning device 200.

The blower 240 may be provided to move the gas in a specific direction. For example, the blower 240 may include a supply air blower (e.g., the first blower 171 of FIG. 3) or an exhaust blower (e.g., the second blower 173 of FIG. 3). The supply air blower 171 may be provided to supply air indoors. The exhaust blower 173 may be provided to discharge air outdoors. Further, the blower 240 may be additionally provided in the air conditioning device 200 to form an air flow.

According to an embodiment of the disclosure, the blower 240 may be implemented as a fan. The blower 240 may be implemented as various types of fans, including a turbo fan, a radial fan, a sirocco fan, or an axial fan.

According to an embodiment of the disclosure, the blower 240 may be operated (switched-on) or stopped (switched-off) by the controller 210. The blower 240 may be operated or stopped by an electrical signal transmitted from the controller 210. To that end, the blower 240 may include a toggle switch.

The heat exchanger 250 may be provided to exchange thermodynamic energy between outdoor air and indoor air. The heat exchanger 250 may be implemented as a total heat exchange element (e.g., the heat exchanger 140 of FIG. 1). The heat exchanger 250 may adjust a temperature difference between the outside air and the inside air. The heat exchanger 250 may exchange sensible heat or latent heat contained in the outside air or the inside air.

The heat exchanger 250 may be operated by the controller 210. The heat exchanger 250 may be operated or stopped by a signal transmitted by the controller 210.

According to an embodiment of the disclosure, the heat exchanger 250 may include a heater 251. The heater 251 may be implemented integrally with or independently of the heat exchanger 250.

For example, the heater 251 may heat a carbon dioxide adsorption filter (e.g., the first filter 150 of FIG. 3) to a predetermined temperature (e.g., 65°C to 70°C). The heater 251 may heat the filter 150 to desorb carbon dioxide adsorbed to the filter unit.

According to an embodiment of the disclosure, the heater 251 may be provided near the first filter 150 to heat the first filter 150. For example, the heater 251 may be implemented in the form of a heating wire installed around the first filter 150. The heater 251 may be driven with power supplied by an external power source.

According to an embodiment of the disclosure, the heater 251 may be operated by the controller 210 or may be stopped. The heater 251 may be operated or stopped by a control signal transmitted from the controller 210.

The controller 210 may control the overall operation to be performed by the air conditioning device 200. The controller 210 may remotely control the air conditioning device 200 by communicating with a server (not shown).

The controller 210 may transmit or receive an electrical signal to/from one or a plurality of components included in the air conditioning device 200.

For example, the controller 210 may obtain information detected by the sensor 220.

For example, the controller 210 may transmit a switching signal so that the damper 230 is alternately opened or closed.

For example, the controller 210 may transmit a switching signal so that the blower 240 is operated or stopped.

For example, the controller 210 may transmit a switching signal so that the heat exchanger 250 is operated or stopped.

For example, the controller 210 may transmit a switching signal so that the heater 251 is operated or stopped.

According to an embodiment of the disclosure, the controller 210 may select an operation mode of the air conditioning device 200. For example, the driving mode may be selected by the user's manipulation. The operation mode may include, e.g., a ventilation operation mode, a circulation operation mode, and an automatic driving mode. The ventilation operation mode may refer to a mode in which outdoor air is supplied indoors and indoor air is discharged outdoors. The circulation operation mode may refer to a mode in which indoor air is purified inside the air conditioning device 200 and supplied back indoors. The automatic driving mode may mean a mode of driving in at least one of the ventilation mode or the circulation mode based on the concentration of indoor carbon dioxide.

For example, the controller 210 may determine to operate in the ventilation mode based on the indoor carbon dioxide concentration detected by the sensor 220. The ventilation mode may refer to an operation mode for adsorption of carbon dioxide in indoor air to the filter 150 provided inside the air conditioning device 200. If the indoor carbon dioxide concentration exceeds a threshold concentration, the controller 210 may control to operate in the ventilation mode. The threshold concentration may be, e.g., 1200 ppm. The controller 210 may control to operate in the ventilation mode until the indoor carbon dioxide concentration decreases below the threshold concentration. The threshold concentration may be, e.g., 1000 ppm.

For example, when the concentration of the indoor carbon dioxide is less than or equal to the threshold concentration or the concentration of the carbon dioxide collected in the filter 150 exceeds a threshold capacity, the controller 210 may operate the heater 251 to remove the carbon dioxide collected in the filter 150. The threshold concentration may be, e.g., 1000 ppm. The controller 210 may operate the heater 251 to heat the filter 150 to a predetermined temperature. The predetermined temperature may be, e.g., 65°C to 70°C. The controller 210 may control to operate in the ventilation mode to discharge carbon dioxide controlled by the filter 150 outdoors.

According to an embodiment of the disclosure, as carbon dioxide adsorbed to the filter 150 is removed at a relatively low temperature, energy used to regenerate the filter 150 may be reduced.

Although not shown, the air conditioning device 200 may include a communication module. The communication module may receive an input generated by the user's manipulation. For example, the communication module may include an infrared transmission/reception module. The communication module may receive a signal generated by the controller (e.g., a remote controller).

For example, the communication module may include a wireless communication module. The communication module may transmit the operation state of the air conditioning device 200 to an external electronic device (e.g., the user terminal) using Wi-Fi and Bluetooth.

Although not shown, the air conditioning device 200 may include a display module (e.g., a display). The display module may be provided integrally with the air conditioning device 200 or may be provided independently outside the air conditioning device 200. When the display module is integrally implemented with the air conditioning device 200, the display module may be provided on any one surface of the surfaces of the air conditioning device 200 (e.g., one outer surface of the body 110 of FIG. 3). For example, the display module may display a currently operating operation mode or an indoor air state (e.g., temperature, humidity, fine dust, carbon dioxide concentration).

FIG. 3 is a front view of an air conditioning device 100 (e.g., the air conditioning device 100 of FIG. 1) according to an embodiment of the disclosure. In other words, it is a front view when the air conditioning device 100 is viewed in the -y-axis direction.

Referring to FIG. 3, the air conditioning device 100 may be installed to form an air flow between indoors and outdoors. The air conditioning device 100 may be installed, e.g., at a boundary between indoors and outdoors. For example, the air conditioning device 100 may discharge indoor air to the outside and supply outdoor air indoors. For example, the air conditioning device 100 may circulate indoor air. In order to circulate indoor air, the air conditioning device 100 may suck and purify indoor air and discharge it back indoors.

The air conditioning device 100 may include a main body 110. The main body 110 may form an outer appearance of the air conditioning device 100. The main body 110 may include at least one of a metal, plastic, carbon compound, or synthetic resin, or a combination of at least two thereof. The main body 110 may have a substantially hexahedral shape, but is not limited thereto, and may have various shapes. In the disclosure, it is assumed that the air conditioning device 100 has a hexahedral shape.

According to an embodiment of the disclosure, the main body 110 may include a first side 111 facing indoors and a second side 113 facing outdoors. A first intake port 121 through which indoor air is introduced may be provided in the first side 111. The first side 111 may be provided with a first discharge port 127 through which air present in the air conditioning device 100 is discharged indoors. A second intake port 123 through which outdoor air is introduced may be provided in the second side 113. The second side 113 may be provided with a second discharge port 125 through which air present in the air conditioning device 100 is discharged outdoors.

According to an embodiment of the disclosure, the heat exchanger 140 may be provided inside the main body 110. The heat exchanger 140 may exchange energy of the indoor air RA introduced from indoors with energy of the outdoor air OA introduced from outdoors. The heat exchanger 140 may be implemented as a total heat exchanger. The heat exchanger 140 may receive power from an external power source to reduce a temperature difference between the indoor air RA and the outdoor air OA. Due to the heat exchanger 140, energy efficiency of the air conditioning device 100 may be increased.

According to an embodiment of the disclosure, a flow path according to at least one air flow may be formed inside the main body 110. For example, the at least one flow path may be formed as a pipe partitioned in a grid shape inside the heat exchanger 140. The at least one flow path may be formed of a porous pipe. The at least one flow path may be partitioned so that air may move in the intended direction inside the air conditioning device 100. Due to the at least one flow path provided inside the heat exchanger 140, air moving in different directions may move independently without being mixed. For example, the at least one flow path may include a first flow path for guiding indoor air RA in a direction in which the indoor air RA is introduced and discharged outdoors. The at least one flow path may include a second flow path for guiding outdoor air OA in a direction in which the outdoor air OA is introduced and supplied indoors.

According to an embodiment of the disclosure, the heat exchanger 140 may include at least one plate 141, 143, 145, and 147 forming an outer appearance thereof. The at least one plate 141, 143, 145, or 147 may include some or all of a first plate 141, a second plate 143, a third plate 145, or a fourth plate 147.

For example, the first plate 141 may be defined as a plate provided at a position where the indoor air RA passing through the first intake port 121 contacts the heat exchanger 140.

For example, the second plate 241 may be defined as a plate provided at a position where the outdoor air OA passing through the second intake port 123 contacts the heat exchanger 140.

For example, the third plate 145 may be defined as a plate provided at a position where air to pass through the heat exchanger 140 and be discharged to the second discharge port 125 is discharged from the heat exchanger 140. The first plate 141 and the third plate 145 may face each other.

For example, the fourth plate 147 may be defined as a plate provided at a position where air to pass through the heat exchanger 140 and be discharged to the first discharge port 127 is discharged from the heat exchanger 140. The second plate 143 and the fourth plate 147 may face each other.

According to an embodiment of the disclosure, one edge of the first plate 141 may contact one edge of the second plate 143. The other edge of the second plate 143 may contact one edge of the third plate 145. The other edge of the third plate 145 may contact one edge of the fourth plate 147. The other edge of the fourth plate 147 may contact one edge of the first plate 141.

According to an embodiment of the disclosure, the at least one partition wall 130 may be provided inside the main body 110. The at least one partition wall 130 may be provided to partition the inside of the main body 110 into a plurality of spaces. The plurality of spaces inside the main body 110 partitioned by the at least one partition wall 130 may be defined as compartments.

According to an embodiment of the disclosure, the at least one partition 130 may include a first partition 131, a second partition wall 133, a third partition 135, or a fourth partition 137.

For example, the first partition wall 131 may extend in a vertical direction (e.g., the +z-axis direction) from an edge at which the first plate 141 and the second plate 143 contact each other to an upper side of the main body 110.

For example, the second partition wall 133 may extend in the horizontal direction (e.g., the +x-axis direction) from an edge where the second plate 143 and the third plate 145 contact each other to the right side of the main body 110.

For example, the third partition wall 135 may extend in a vertical direction (e.g., the -z-axis direction) from an edge at which the third plate 145 and the fourth plate 147 contact each other to the lower side of the main body 110.

For example, the fourth partition wall 137 may extend in the horizontal direction (e.g., the -x-axis direction) from an edge where the fourth plate 147 and the first plate 141 contact each other to the left side of the main body 110.

According to an embodiment of the disclosure, the at least one partition wall 130 and the first to fourth plates 141, 143, 145, and 147 may form at least one compartment C1, C2, C3, and C4 inside the main body 110.

For example, the first compartment C1 may be formed as a space in which the main body 110 is partitioned by the first plate 141, the first partition wall 131, and the fourth partition wall 137.

For example, the second compartment C2 may be formed as a space in which the main body 110 is partitioned by the second plate 143, the first partition wall 131, and the second partition wall 133.

For example, the third compartment C3 may be formed as a space in which the main body 110 is partitioned by the third plate 246, the second partition wall 133, and the third partition wall 135.

For example, the fourth compartment C4 may be formed as a space in which the main body 110 is partitioned by the fourth plate 147, the third partition wall 135, and the fourth partition wall 137.

According to an embodiment of the disclosure, at least one filter 150 and 160 may be provided inside the main body 210. The at least one filter 150 or 160 may include a first filter 150 or a second filter 160. The first filter 150 and the second filter 160 may be implemented as separate filters or may be implemented as one filter.

For example, the first filter 150 may be implemented as a filter for adsorbing carbon dioxide. The first filter 150 may include a carbon dioxide adsorbent. The first filter 150 may have a surface coated with the carbon dioxide adsorbent, may be implemented in the form of pellets, or may be formed of the carbon dioxide adsorbent.

For example, the second filter 160 may be implemented as a filter for filtering harmful substances. The second filter 160 may include, e.g., a pre-filter or a high efficiency particulate air filter (HEPA filter). The second filter 160 may remove harmful substances such as fine dust, harmful gases, radon, and hydrogen carbide contained in the outdoor air introduced into the air conditioning device 100.

For example, the carbon dioxide adsorbent may be configured by combining a carbon nanofiber material, a nanoparticle material, and a material containing an amine group at a predetermined component ratio. The carbon dioxide adsorbent may be formed by combining, e.g., a compound in which the nanoparticle material is bonded to a surface of the carbon nanofiber material using the carbon nanofiber material as a support, and the material containing the amine group to a surface of the compound. The carbon nanofiber material may include, e.g., carbon nanotube (CNT) or graphene nanofiber (GNF).

The nanoparticles may include, e.g., silicon dioxide (SiO₂), aluminum oxide (Al₂O₃), iron tetraoxide (Fe₃O₄), and titanium dioxide (TiO₂). It is possible to prepare a carbon dioxide adsorbent in the form of a compound by dispersing and bonding the nanoparticles using the carbon nanofiber material as a support by taking advantage of the fact that the nanoparticles have the property to agglomerate.

The material containing the amine group may include, e.g., polyethylenimine (PEI), aminopropyl triethoxysilane (3-aminopropyl triethoxysilane), tetraethylenepentamine (TEPA), or diethylenetriamine. Further, the material containing the amine group may include various materials including an amine group. The material containing the amine group may enable chemical adsorption as well as physical adsorption of the carbon dioxide adsorbent.

For example, carbon nanofibers and nanoparticle materials constituting the carbon dioxide adsorbent may be formed by varying their respective component proportions. The process of preparing the carbon dioxide adsorbent is as follows. For the carbon dioxide adsorbent, the carbon nanofiber and the nanoparticle material may be stirred for a predetermined time (e.g., 3 hours) and be subjected to ultrasonic treatment. Accordingly, dispersibility of nanoparticles bonded to the carbon nanofibers, which are supports constituting the carbon dioxide adsorbent, may be increased. The amine group may be bonded to the surface of the compound of the carbon nanofibers and the nanoparticles. The concentration of the amine group may meet, e.g., 40 to 60 wt%. The amine group may be bonded to the surface of the compound of the carbon nanofibers and the nanoparticles, and then dried in a vacuum oven at a predetermined temperature (e.g., 70°C) for a predetermined time (e.g., 12 hours). The carbon dioxide adsorbent may be obtained by making the dried material into powder and drying it at a predetermined temperature (e.g., 70 °C) for a predetermined time (e.g., 12 hours).

According to an embodiment of the disclosure, carbon dioxide adsorption performance, oxidation, and volatility of the adsorbent may be determined according to the molecular weight of the amine group constituting the carbon dioxide adsorbent. For example, as the molecular weight of the amine group constituting the carbon dioxide adsorbent increases, the carbon dioxide adsorption performance may decrease, and oxidation and volatility of the gaseous material containing the amine group may increase. As the oxidation and volatility of the gaseous material containing the amine group increase, an unpleasant odor may occur depending on the type of amine gas desorbed from the carbon dioxide adsorbent. Due to these characteristics, the molecular weight of the amine group applied to the carbon dioxide adsorbent may be considered. For example, the molecular weight of the amine group may be considered in the range of 600 to 25,000.

For example, the carbon dioxide adsorbent may achieve a specific surface area of 500 m²/g. By achieving the specific surface area of the carbon dioxide adsorbent, the porous material may be replaced with a nanosilica material.

For example, the performance of the carbon dioxide adsorbent may be analyzed by thermogravimetric analysis (TGA). The performance of the carbon dioxide adsorbent may include carbon dioxide adsorption performance and carbon dioxide desorption

(regeneration) performance. A method for analyzing the performance of the carbon dioxide adsorbent with the thermogravimetric analysis is as follows. The adsorption performance may expose the carbon dioxide adsorbent to carbon dioxide gas having a concentration of 2000 ppm meeting a flow rate condition of 200 ml/min for about 60 minutes. The carbon dioxide adsorbent measured thereby may meet, e.g., a performance capable of adsorbing carbon dioxide of 1.5 mmol/g to 2.5 mmol/g, and may prepare a carbon dioxide adsorbent with a goal of meeting a performance of 5.0 mmol/g according to conditions for the ratio of the components constituting the carbon dioxide adsorbent. The desorption performance may be measured by exposing nitrogen (N₂) gas having a temperature of about 70°C, a temperature increase rate of 10°C/min, and meeting a flow rate condition of 90ml/min. The carbon dioxide adsorbent may maintain, e.g., 93% regeneration performance. The carbon dioxide adsorbent that has undergone a regeneration process may have, e.g., an adsorption property of 98% to 99%. The carbon dioxide adsorbent may be repeatedly used through a regeneration process.

According to an embodiment of the disclosure, the carbon dioxide adsorbent may be prepared through a phase inversion method. In preparing the carbon dioxide adsorbent, a polymer composite solution may be introduced into a solvent (e.g., an ethanol solution) in the form of a droplet. Accordingly, the carbon dioxide adsorbent may have a membrane or bead type rather than a powder type. The bead-type carbon dioxide adsorbent allows the adsorption component to be distributed at a high density, thereby enhancing adsorption performance even under low concentrations of carbon dioxide. The unit diameter of the bead-type adsorbent may meet, e.g., 3 mm. Through the preparing method, a bead-type adsorbent that may be usable without further processing the carbon dioxide adsorbent may be obtained.

According to an embodiment of the disclosure, the carbon dioxide adsorbent may be prepared by applying a polymer amine group to a synthetic resin-based adsorbent. For example, the obtained carbon dioxide adsorbent may include a synthetic resin-based adsorbent formed of polystyrene. Since the carbon dioxide adsorbent contains a hydrophobic polystyrene material, it may be less affected by moisture. The size of the carbon dioxide adsorbent may be identified with the naked eye, and the density is low, so that it may be easy to treat a material containing an amine group when preparing the carbon dioxide adsorbent. The carbon dioxide adsorbent may be prepared in the form of beads through encapsulation using a phase inversion method.

According to an embodiment of the disclosure, the carbon dioxide adsorbent may increase the selective adsorption performance of carbon dioxide gas and moisture resistance due to the material containing the amine group and nanoparticles. The carbon dioxide adsorbent may have different performance depending on the ratio of moisture contained in the air. Accordingly, as the moisture resistance of the carbon dioxide adsorbent increases, the performance of the carbon dioxide adsorbent may be enhanced.

According to an embodiment of the disclosure, since the carbon dioxide adsorbent is composed of carbon nanofibers and nanoparticles, a carbon dioxide adsorption filter may be prepared using materials harmless to the human body.

According to an embodiment of the disclosure, by applying a material containing an amine group to a carbon dioxide adsorbent, not only physical adsorption but also chemical adsorption may be possible, thereby enhancing carbon dioxide adsorption performance.

According to an embodiment of the disclosure, adsorption performance may be determined according to the type and component ratio of the carbon nanofibers, nanoparticles, and material containing the amine group constituting the carbon dioxide adsorbent. For example, the performance of the carbon dioxide adsorbent may meet 1.5 mmol/g to 2.5 mmol/g. However, the disclosure is not limited thereto, and higher performance may be met according to the type and component ratio of the materials constituting the carbon dioxide adsorbent. As the performance of the carbon dioxide adsorbent increases, cooling or heating energy required to reduce carbon dioxide present in the indoor air RA may be reduced.

According to an embodiment of the disclosure, the air conditioning device 100 may have different carbon dioxide adsorption performance depending on the size of the indoor space, the partitioned shape of the indoor space, or the number of occupants.

For example, the first filter 150 to which the carbon dioxide adsorbent having a performance of 1.3 mmol/g and a weight of 500 g is applied may reduce a carbon dioxide concentration of 100 ppm for each of about five times in an apartment of 84 square meters (m³).

According to an embodiment of the disclosure, the first filter 150 may be provided at any point in a section in which the first air passage and the second air passage are common. The first air passage may be defined as an air passage on a path through which indoor air RA introduced through the first intake port 121 moves in the order of the first compartment C1, the third compartment C3, the second compartment C2, and the fourth compartment C4 and is discharged through the second discharge port 125. **In** other words, the first air passage may be a movement path of air that is the indoor air RA circulating inside the air conditioning device 100 and supplied as the supply air SA. The second air passage may be defined as an air passage on a path through which indoor air RA introduced through the first intake port 121 moves in the order of the first compartment C1 and the third compartment C3 and is discharged through the second discharge port 125. **In** other words, the second air passage may be a movement path of air that is indoor air RA passing through the air conditioning device 100 and discharged as exhaust air EA. As the first filter 150 is provided at a point where the first air passage and the second air passage are common, the air conditioning device 100 may adsorb carbon dioxide present in indoor air.

For example, the first filter 150 may be provided at a point at which the indoor air RA is sucked. The first filter 150 may be provided to remove carbon dioxide contained in the indoor air RA before air is introduced into the heat exchanger 140. The first filter 150 may be provided on the first compartment C1. The first filter 150 may extend in a direction (e.g., the z-axis direction) perpendicular to a direction in which air is introduced through the first intake port 121. The first filter 150 may extend by the height of the first compartment C1 in the z-axis direction.

For example, the first filter 150 may be provided on the heat exchanger 140. The first filter 150 may be provided inside or on a surface of the heat exchanger 140. The first filter 150 may be provided, e.g., on the surface of the first plate 141 of the heat exchanger 140. The first filter 150 may be fixed to the surface of the first plate 141. In order for the first filter 150 to be fixed to the surface of the first plate 141, a guide member (not shown) for fixing the first filter 150 to the surface of the first plate 141 may be provided. The guide member may be integrally formed with the first plate 141, or may be bolted or adhered to the first plate 141. For example, a groove as deep as the first filter 150 may be formed in the guide member. The first filter 150 may be fitted into the guide member. As the guide member is provided on the surface of the first plate 141, the user may conveniently replace the first filter 150. The first filter 150 may be fixed to the heat exchanger 140 by screwing. Although not shown, the first filter 150 may be provided on the surface of the third plate 145 of the heat exchanger 140. When the first filter 150 is implemented as a plurality of filters, the first filter 150 may be provided on each of the surfaces of the first plate 141 and the third plate 145.

According to an embodiment of the disclosure, the second filter 160 may be provided at a point where the third air passages are common. The third air passage may be defined as an air passage on a path through which outdoor air OA introduced through the second intake port 123 moves in the order of the second compartment C2 and the third compartment C3 and is discharged through the first discharge port 127. In other words, the third air passage may be a movement path of air through which outdoor air OA passes through the air conditioning device 100 and is discharged as the supply air SA. As the second filter 160 is provided on the third air passage, the air conditioning device 100 may remove harmful substances present in outdoor air.

For example, the second filter 160 may be provided on the heat exchanger 140. The second filter 160 may be provided inside or on a surface of the heat exchanger 140. The second filter 160 may be provided, e.g., on the surface of the second plate 143 of the heat exchanger 140. The second filter 160 may be fixed to the surface of the second plate 143. In order for the second filter 160 to be fixed to the surface of the second plate 143, a guide member (not shown) for fixing the second filter 160 to the surface of the second plate 143 may be provided. The guide member may be integrally formed with the second plate 143, or may be bolted or adhered to the second plate 143. For example, a groove as deep as the second filter 160 may be formed in the guide member. The second filter 160 may be fitted into the guide member. Since the guide member is provided on the surface of the second plate 143, the user may conveniently replace the second filter 160. The second filter 160 may be fixed to the heat exchanger 140 by screwing. Although not shown, the second filter 160 may be provided on the surface of the fourth plate 147 of the heat exchanger 140. When the second filter 160 is implemented as a plurality of filters, the second filter 160 may be provided on each of the surfaces of the second plate 143 and the fourth plate 147.

For example, the second filter 160 may be provided at a point at which the outdoor air OA is sucked. The second filter 150, e.g., may be provided at any point on the second intake port 123 to filter impurities contained in the outdoor air OA. The second filter 150 may be disposed perpendicular to a path through which air is introduced into the second intake port 123.

For example, the second filter 160 may be provided at a point where the supply air SA is discharged. The second filter 160, e.g., may be provided at any point on the first discharge port 127 to filter impurities contained in the supply air SA to be supplied indoors. The second filter 150 may be disposed perpendicular to a path through which air is introduced into the first discharge port 127.

According to an embodiment of the disclosure, the first filter 150 and the second filter 160 may be provided together at the same position. For example, the first filter 150 and the second filter 160 may be positioned on the first plate 151.

According to an embodiment of the disclosure, the first filter 150 and the second filter 160 may be configured as one filter. When the first filter 150 and the second filter 160 are configured as one filter, the filter may be provided in a space (e.g., the first compartment C1) in which indoor air RA is sucked. The filter may extend in a direction (e.g., the z-axis direction) perpendicular to the direction in which the indoor air RA is sucked.

According to an embodiment of the disclosure, at least one dampers 121a, 123a, 125a, 127a, 131a, 133a, 135a, 137a, and 139a (e.g., the damper 230 of FIG. 2) may be provided in the air conditioning device 100. The at least one damper 121a, 123a, 125a, 127a, 131a, 133a, 135a, 137a, and 139a may be provided to open or close a passage for air entering and exiting the air conditioning device 100 or air circulating in the air conditioning device 100. The at least one damper 121a, 123a, 125a, 127a, 131a, 133a, 135a, 137a, and 139a may be opened or closed by a controller (e.g., the controller 110 of FIG. 2).

According to an embodiment of the disclosure, the at least one damper 121a, 123a, 125a, 127a, 131a, 133a, 135a, 137a, and 139a may include a first damper 121a, a second damper 123a, a third damper 125a, a fourth damper 127a, a fifth damper 131a, a sixth damper 133a, a seventh damper 135a, an eighth damper 137a, or a ninth damper 139a. Although not shown, the at least one damper 121a, 123a, 125a, 127a, 131a, 133a, 135a, 137a, and 139a may further include more dampers as needed.

For example, the first damper 121a may be provided in the first intake port 121. The first damper 121a may open or close the first intake port 121 through which the indoor air RA is introduced.

For example, the second damper 123a may be provided in the second intake port 123. The second damper 123a may open or close the second intake port 123 through which the outdoor air OA is introduced.

For example, the third damper 125a may be provided in the second discharge port 125. The third damper 125a may open or close the second discharge port 125 discharged as the exhaust air EA.

For example, the fourth damper 127a may be provided in the first discharge port 127. The fourth damper 127a may open or close the first discharge port 127 supplied as the supply air SA.

For example, the fifth damper 131a may be provided on the first partition wall 131. The fifth damper 131a may open or close an air passage between the first compartment C1 and the second compartment C2.

For example, the sixth damper 133a may be provided on the second partition wall 133. The sixth damper 133a may open or close an air passage between the second compartment C2 and the third compartment C3.

For example, the seventh damper 135a may be provided on the third partition wall 135. The seventh damper 135a may open or close an air passage between the third compartment C3 and the fourth compartment C4.

For example, the eighth damper 137a may be provided on the fourth partition wall 137. The eighth damper 137a may open or close an air passage between the fourth compartment C4 and the first compartment C1.

For example, the ninth damper 139a may be provided on an upper surface of the main body 110. The ninth damper 139 may be provided at a point spaced apart from the power supply 180 by a predetermined distance in the +y-axis direction. The ninth damper 139a may open or close the passage so that air present in the first compartment C1 may be discharged outdoors without passing through the heat exchanger 140. As the ninth damper 139a is provided in the air conditioning device 100, a bypass path for discharging indoor air RA outdoors may be formed.

According to an embodiment of the disclosure, the main body 110 may further include a separate discharge port (not shown) for discharging air discharged to the ninth damper 139 outdoors. The discharge port may be defined as a third discharge port. The third discharge port may be provided with a passage for fluid communication between the first compartment C1 and the outside. For example, the third discharge port may be provided with a damper that may be opened or closed to allow air to move outdoors. By opening or closing the damper provided in the third discharge port, the air conditioning device 100 may allow air staying in the first compartment C1 to bypass the passage from the first compartment C1 and be discharged outdoors.

According to an embodiment of the disclosure, as the at least one damper 121a, 123a, 125a, 127a, 131a, 133a, 135a, 137a, and 139a is opened or closed, an air passage may be formed.

For example, if the first damper 121a, the fourth damper 127a, and the sixth damper 133a are opened and the remaining dampers 123a, 125a, 131a, 135a, 137a, and 139a are closed, the indoor air RA is introduced into the air conditioning device 100 through the first intake port 121, moves to the first compartment C1, the third compartment C4, the second compartment C2, and the fourth compartment C4 in order, and then is supplied indoors through the first discharge port 127. In other words, the air may move along the first air passage.

For example, when the first damper 121a and the third damper 125a are opened and the remaining dampers 123a, 127a, 131a, 133a, 135a, 137a, and 139a are closed, the indoor air RA is introduced into the air conditioning device 100 through the first intake port 121, moves to the first compartment C1 and the third compartment C3 in order, and then is discharged outdoors through the second discharge port 125. In other words, the air may move along the second air passage.

For example, when the second damper 123a and the fourth damper 127a are opened and the remaining dampers 121a, 125a, 131a, 133a, 135a, 137a, and 139a are closed, the outdoor air OA is introduced into the air conditioning device 100 through the second intake port 123, moves to the second compartment C2 and the fourth compartment C4 in order, and then is supplied indoors through the first discharge port 127. In other words, the air may move along the third air passage.

For example, when the first damper 121a, the third damper 125a, the fifth damper 131a, and the sixth damper 133a are opened and the remaining dampers 123a, 127a, 135a, 137a, and 139a are closed, the indoor air RA is introduced into the air conditioning device 100 through the first intake port 121, moves to the first compartment C1, the second compartment C2, and the third compartment C3 in order without passing through the heat exchanger 140, and then is discharged outdoors through the second discharge port 127. In other words, the air may move along the fourth air passage.

For example, when the first damper 121a and the ninth damper 139a are opened and the remaining dampers 123a, 125a, 127a, 131a, 133a, 135a, and 137a are closed, indoor air RA is introduced into the air conditioning device 100 through the first intake port 121 and discharged outdoors from the first compartment C1 without passing through the heat exchanger 140. In other words, the air may move along the fifth air passage.

According to an embodiment of the disclosure, the air conditioning device 100 may further include a damper in addition to at least one damper 121a, 123a, 125a, 127a, 131a, 133a, 135a, 137a, and 139a. Although not illustrated, the at least one damper 121a, 123a, 125a, 127a, 131a, 133a, 135a, 137a, and 139a may include a damper for opening or closing the third discharge port connected to the ninth damper 139a. The damper may be provided on the third discharge port to discharge air present in the first compartment C1 outdoors. The air conditioning device 100 may open or close the damper provided in the third discharge port.

According to an embodiment of the disclosure, the at least one blower 171 or 173 (e.g., the blower 140 of FIG. 2) may be provided to control the air in the air conditioning device 100 to move in an arbitrary direction. The at least one blower 171 and 173 may accelerate the moving speed of air in the air conditioning device 100. The at least one blower 171 and 173 may be positioned adjacent to an intake port (e.g., the first intake port 121 or the second intake port 123) or a discharge port (e.g., the first discharge port 127 or the second discharge port 125), but is not limited thereto. The at least one blower 171 or 173 may include a first blower 171 or a second blower 173.

For example, the first blower 171 may be provided near the first discharge port 127. The first blower 171 may supply air in the fourth compartment C4 indoors.

For example, the second blower 173 may be provided near the second discharge port 125. The second blower 173 may discharge air in the third compartment C3 outdoors.

Although not shown, the air conditioning device 100 may further include a blower in addition to the first blower 171 or the second blower 173. The blower may be provided, e.g., near the first intake port 121 to allow indoor air RA to be introduced into the air conditioning device 100 more quickly. The blower may be provided, e.g., near the second intake port 123 to allow the outdoor air OA to be introduced into the air conditioning device 100 more quickly. The blower may be provided, e.g., near the ninth damper 139a to quickly discharge air present in the first compartment C1 to the outside.

According to an embodiment of the disclosure, the air conditioning device 100 may include a heater (not shown) (e.g., the heater 251 of FIG. 2). The heater may be provided to heat the first filter 150 to a predetermined temperature. The predetermined temperature may meet, e.g., 65°C to 70°C. When the first filter 150 is heated to the predetermined temperature, carbon dioxide adsorbed to the first filter 150 may be separated. Accordingly, the regenerated first filter 150 may adsorb carbon dioxide again by the adsorption capacity.

According to an embodiment of the disclosure, the heater may be provided near the first filter 150. The heater may be implemented in the form of a heating wire. The heating wire may be composed of a conducting wire having a predetermined resistance value. The heater may be heated to a predetermined temperature by an external power source. In addition to those shown, the heater may be implemented in various forms. For example, the heater may be implemented in the form of a hot air fan that discharges air of a predetermined temperature to the first filter 150.

According to an embodiment of the disclosure, the air conditioning device 100 may include at least one sensor (not shown) (e.g., the sensor 220 of FIG. 2). The at least one sensor may include a gas sensor.

For example, the gas sensor may detect the concentration of a specific gas (e.g., carbon dioxide). The gas sensor may detect the concentration of carbon dioxide present in the indoor air RA, or may detect the concentration of carbon dioxide adsorbed to the first filter 150. The gas sensor may transmit information about the detected carbon dioxide concentration to a control unit (e.g., the controller 210 of FIG. 2).

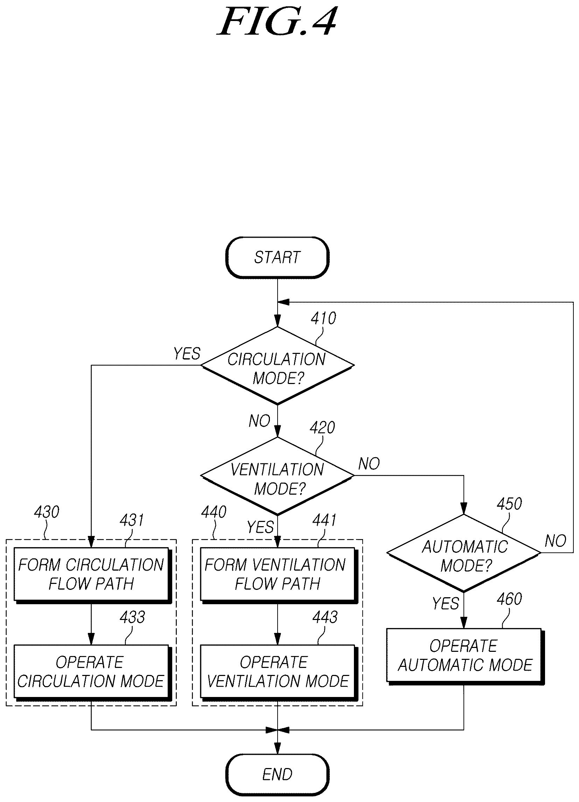

FIG. 4 is a control flowchart for selecting an operation type of an air conditioning device 100 (e.g., the air conditioning device 100 of FIG. 1) according to an embodiment of the disclosure. In the following control flowchart, each operation is not limited to that illustrated, and the same operation may be repeated, the order may be different, or several operations may be operated simultaneously.

Referring to FIG. 4, when there is the user's manipulation, the air conditioning device 100 may select an operation type by the user's manipulation. When there is no user's manipulation, the air conditioning device 100 may select an operation type based on a preset condition.

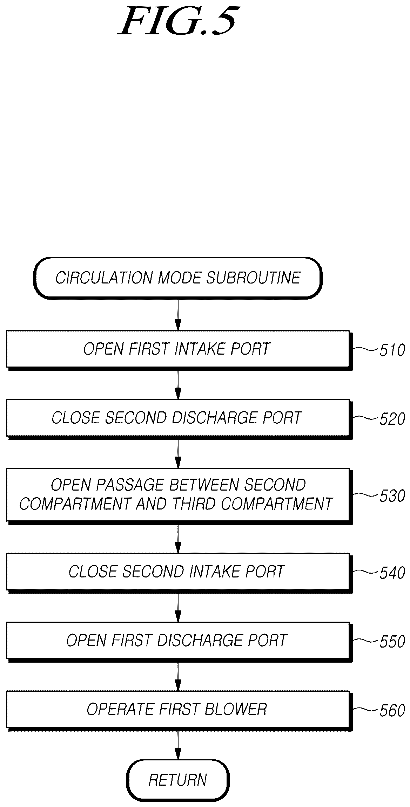

According to an embodiment of the disclosure, in operation 410, the air conditioning device 100 may determine whether the air conditioning device 100 is in the circulation mode. The air conditioning device 100 may determine whether the circulation mode is selected by the user's manipulation. In the circulation mode, in operation 430, the air conditioning device 100 may execute a subroutine for performing the circulation operation based on the circulation mode. The air conditioning device 100 may form a circulation flow path in operation 431 to execute a subroutine for operating in the circulation mode. The air conditioning device 100 may operate in the circulation mode in operation 433. A control flowchart of the subroutine for operating in the cyclic mode is described in detail below with reference to FIG. 5.

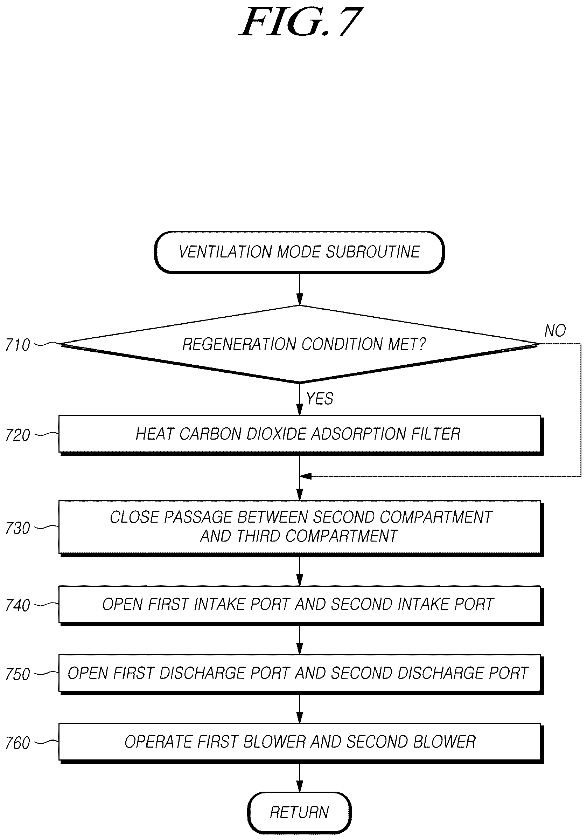

According to an embodiment of the disclosure, in operation 420, the air conditioning device 100 may determine whether the air conditioning device 100 is in the ventilation mode. The air conditioning device 100 may determine whether the ventilation mode is selected by the user's manipulation. In the ventilation mode, in operation 440, the air conditioning device 100 may execute a subroutine for performing the ventilation operation based on the ventilation mode. In operation 441, the air conditioning device 100 may form a ventilation flow path to execute a subroutine for operating in the ventilation mode. The air conditioning device 100 may operate in the ventilation mode in operation 443. A control flowchart of the subroutine for operating in the ventilation mode is described in detail with reference to FIG. 7.

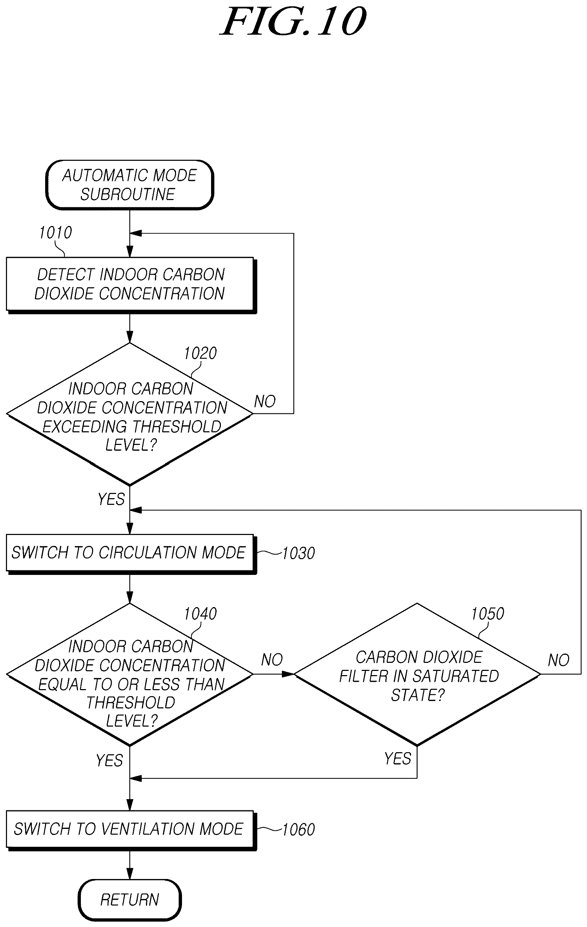

According to an embodiment of the disclosure, when the air conditioning device 100 is neither in the ventilation mode nor in the circulation mode, the air conditioning device 100 may determine whether the air conditioning device 100 is in the automatic mode in operation 450. The air conditioning device 100 may determine whether there is no mode selected by the user by operating in the ventilation mode or the circulation mode, or whether the automatic mode is selected by the user's manipulation. In the automatic mode, in operation 460, the air conditioning device 100 may execute a subroutine for operating in the automatic mode. A control flowchart of the subroutine for operating in the automatic mode is described below in detail with reference to FIG. 10.

FIG. 5 is a control flowchart of a subroutine for a circulation operation (e.g., operation 430 of FIG. 4) in an air conditioning device 100 (e.g., the air conditioning device 100 of FIG. 1) according to an embodiment of the disclosure. At least one of the dampers (e.g., the first to ninth dampers 121a, 123a, 125a, 127a, 131a, 133a, 135a, 137a, and 139a of FIG. 3) not mentioned as being opened or closed in the control flowcharts of FIG. 5 or its subsequent figures may be understood as being in the closed state.

Referring to FIG. 5, in operation 510, the air conditioning device 100 may open a first intake port (e.g., the first intake port 121 of FIG. 3). In order to open the first intake port 121, the air conditioning device 100 may control to open a first damper (e.g., the first damper 121a of FIG. 3) provided near the first intake port 121. If the first intake port 121 is opened, indoor air RA may be introduced into the air conditioning device 100. Carbon dioxide gas having a predetermined concentration or more may be present in the indoor air RA.

According to an embodiment of the disclosure, in operation 520, the air conditioning device 100 may close the second discharge port (e.g., the second discharge port 125 of FIG. 3). In order to close the second discharge port 125, the air conditioning device 100 may control a third damper (e.g., the third damper 125a of FIG. 3) provided near the second discharge port 125 to be closed. If the first discharge port 225 is closed, air staying in the air conditioning device 100 (e.g., the third compartment C3) may be prevented from being discharged outdoors.

According to an embodiment of the disclosure, in operation 530, the air conditioning device 100 may open a passage between the second compartment (e.g., the second compartment C2 of FIG. 3) and the third compartment (e.g., the third compartment C3 of FIG. 3). In order to open the passage, the air conditioning device 100 may open a sixth damper (e.g., the sixth damper 133a of FIG. 3) provided on the second partition (e.g., the second partition wall 133 of FIG. 3). If the passage is opened, air staying in the third compartment C3 may be guided to the second compartment C2.

According to an embodiment of the disclosure, in operation 540, the air conditioning device 100 may close the second intake port (e.g., the second intake port 123 of FIG. 3). In order to close the second intake port 123, the air conditioning device 100 may control to close a second damper (e.g., the second damper 123a of FIG. 3) provided near the second intake port 123. When the second intake port 123 is closed, air staying inside the air conditioning device 100 (e.g., the second compartment C2) may be prevented from being discharged outdoors.

According to an embodiment of the disclosure, in operation 550, the air conditioning device 100 may open the first discharge port (e.g., the discharge port 227 of FIG. 3). In order to open the first discharge port 127, the air conditioning device 100 may open a fourth damper (e.g., the fourth damper 127a of FIG. 3) provided near the first discharge port 127. When the first discharge port 127 is opened, air staying inside the air conditioning device 100 may be supplied indoors.

According to an embodiment of the disclosure, in operation 560, the air conditioning device 100 may operate a first blower (e.g., the first blower 171 of FIG. 3). If the first blower 171 is operated, supply indoors of the air staying inside the air conditioning device 100 may be accelerated.

According to an embodiment of the disclosure, the illustrated operations are not limited to the illustrated order, and may be changed in order or may operate simultaneously. The above-described operations may be repeatedly performed.

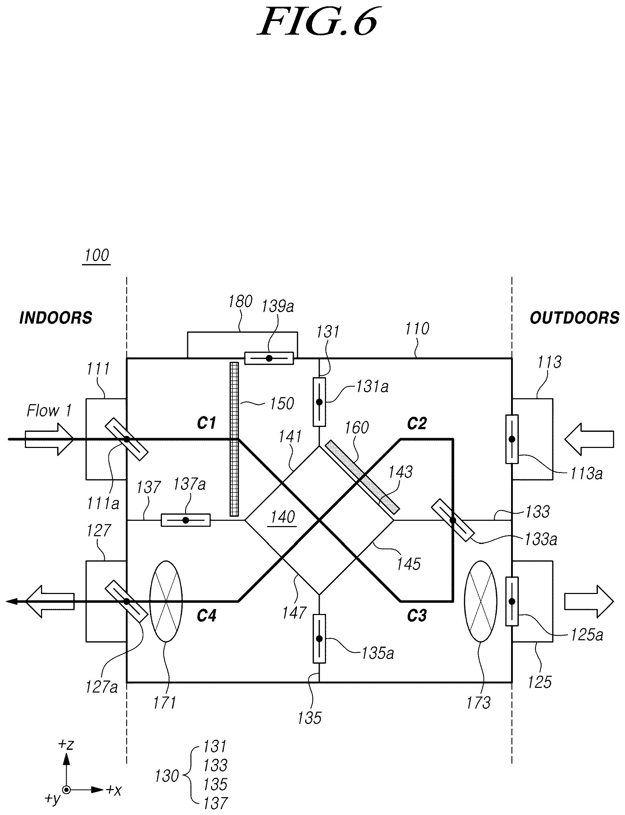

FIG. 6 illustrates an air flow Flow 1 during a circulation operation (e.g., the circulation mode of FIG. 4) in an air conditioning device (e.g., the air conditioning device 100 of FIG. 1) according to an embodiment of the disclosure.

Referring to FIG. 6, as the first intake port 121 is opened, indoor air RA may be introduced into the air conditioning device 100. The introduced air may move from the first compartment C1 to the third compartment C3.

According to an embodiment of the disclosure, the air introduced into the air conditioning device 100 may pass through the first filter 150 provided in the first compartment C1 before reaching the third compartment C3. The air may pass through the first filter 150 and carbon dioxide in the air may be adsorbed to the first filter 150. The air passing through the first filter 150 may have a lower carbon dioxide concentration than the indoor air RA. As the second discharge port 125 is closed, the air may not be discharged outdoors.

According to an embodiment of the disclosure, the air staying in the third compartment C3 may move from the third compartment C3 to the second compartment C2 as the sixth damper 133a is opened. As the second intake port 123 is closed, outdoor air OA may not be introduced into the air conditioning device 100 (e.g., the second compartment C2).

According to an embodiment of the disclosure, air staying in the second compartment C2 may move to the fourth compartment C4. Before the air reaches the fourth compartment C4, the air may pass through the second filter 160 provided in the heat exchanger 140. The air may pass through the second filter 160, and harmful substances contained in the air may be adsorbed to the second filter 160. The air passing through the second filter 160 may have a lower carbon dioxide concentration and a lower concentration of harmful substances than the indoor air RA.

According to an embodiment of the disclosure, as the first discharge port 127 is opened, air staying in the fourth compartment C4 may be supplied indoors. As the first blower 171 is operated, the amount of gas per hour supplied indoors may increase.

According to an embodiment of the disclosure, the supply air SA provided indoors according to the circulation mode may have a lower carbon dioxide concentration and a lower concentration of harmful substances than the indoor air RA.

According to an embodiment of the disclosure, the air conditioning device 100 may repeatedly operate the circulation mode for a predetermined time to remove carbon dioxide and harmful substances present in the indoor air RA at a predetermined level.

According to an embodiment of the disclosure, the air conditioning device 100 may minimize the operation of the heat exchanger 140 while the circulation mode is operated, thereby saving electrical energy required to operate the heat exchanger 140.

According to an embodiment of the disclosure, the air conditioning device 100 may reduce energy required for cooling and heating by purifying the indoor air RA through the first filter 150 or the second filter 160 without exchanging with the outdoor air OA through the circulation mode.

FIG. 7 is a control flowchart of a subroutine for a ventilation operation (e.g., the ventilation mode of FIG. 4) in an air conditioning device 100 (e.g., the air conditioning device 100 of FIG. 1) according to an embodiment of the disclosure.

Referring to FIG. 7, in operation 710, the air conditioning device 100 may determine whether a condition for regenerating a first filter (e.g., the first filter 150 of FIG. 3) is met. For example, the condition for regenerating the first filter 150 may be a case in which the concentration of carbon dioxide adsorbed to the first filter 150 exceeds a threshold capacity of the first filter 150 or the concentration of carbon dioxide present in the indoor air RA is less than or equal to a threshold concentration. The threshold capacity of the first filter 150 may be, e.g., 1200 ppm. The threshold concentration of carbon dioxide present in the indoor air RA may be, e.g., 1000 ppm.

According to an embodiment of the disclosure, when it is determined that the regeneration condition is met by the air conditioning device 100, in operation 720, the first filter 150 may be heated to a predetermined temperature to desorb carbon dioxide adsorbed to the first filter 150. The air conditioning device 100 may operate a heater (e.g., the heater 151 of FIG. 2) to heat the first filter 150 to a predetermined temperature. The predetermined temperature may be, e.g., 65°C to 70°C.

As described above, when the amount of carbon dioxide adsorbed by the first filter 150 exceeds an adsorption volume, the carbon dioxide adsorbed by the first filter 150 may be removed and reused by a method of heating the first filter 150 to increase filter regeneration efficiency. Therefore, it is possible to effectively remove continuously generated carbon dioxide and increase energy efficiency.

According to an embodiment of the disclosure, in operation 730, the air conditioning device 100 may close the passage between the second compartment (e.g., the second compartment C2 of FIG. 3) and the third compartment (e.g., the third compartment C3 of FIG. 3). In order to close the passage, the air conditioning device 100 may close a sixth damper (e.g., the sixth damper 133a of FIG. 3) provided on the second partition (e.g., the second partition wall 133 of FIG. 3). When the passage is closed, air staying in the second compartment C2 and air staying in the third compartment C3 may be divided.

According to an embodiment of the disclosure, in operation 740, the air conditioning device 100 may open the first intake port (e.g., the first intake port 121 of FIG. 3) and the second intake port (e.g., the second intake port 123 of FIG. 3). In order to open the first intake port 121, the air conditioning device 100 may open a first damper (e.g., the first damper 121a of FIG. 3) provided near the first intake port 121. In order to open the second intake port 123, the air conditioning device 100 may open a second damper (e.g., the second damper 123a of FIG. 3) provided near the second intake port 123. If the first intake port 121 is opened, indoor air RA may be introduced into the air conditioning device 100. If the second intake port 123 is opened, outdoor air OA may be introduced into the air conditioning device 100.

According to an embodiment of the disclosure, the indoor air RA introduced into the air conditioning device 100 through the first intake port 121 may pass through the first filter 150 provided in the first compartment C1 before passing through the first compartment C1 and reaching the third compartment C3. The first filter 150 may adsorb carbon dioxide contained in the introduced indoor air. The air passing through the first filter 150 and staying in the third compartment C3 may contain a smaller concentration of carbon dioxide than the indoor air RA.

According to an embodiment of the disclosure, the outdoor air OA introduced into the air conditioning device 100 through the second intake port 123 may pass through the second filter 160 provided in the heat exchanger 140 before passing through the second compartment C2 and reaching the fourth compartment C4. The second filter 160 may adsorb harmful substances contained in the introduced indoor air. The air passing through the first filter 150 and staying in the third compartment C3 may include harmful substances having a smaller concentration than that of the indoor air RA.

According to an embodiment of the disclosure, in operation 750, the air conditioning device 100 may open the first discharge port (e.g., the first discharge port 127 of FIG. 3) and the second discharge port (e.g., the second discharge port 125 of FIG. 3). In order to open the first discharge port 127, the air conditioning device 100 may open a fourth damper (e.g., the fourth damper 127a of FIG. 3) provided near the first discharge port 127. In order to open the second discharge port 125, the air conditioning device 100 may open a third damper (e.g., the third damper 125a of FIG. 3) provided near the second discharge port 125. If the first discharge port 127 is opened, the supply air SA may be supplied to the outside of the air conditioning device 100. If the second discharge port 125 is opened, the exhaust air EA may be discharged to the outside of the air conditioning device 100.

According to an embodiment of the disclosure, in operation 760, the air conditioning device 100 may operate a first blower (e.g., the first blower 171 of FIG. 3) and a second blower (e.g., the second blower 173 of FIG. 3). If the first blower 171 is operated, supply indoors of the air staying inside the air conditioning device 100 may be accelerated. If the second blower 173 is operated, discharge outdoors of the air staying in the air conditioning device 100 may be accelerated.

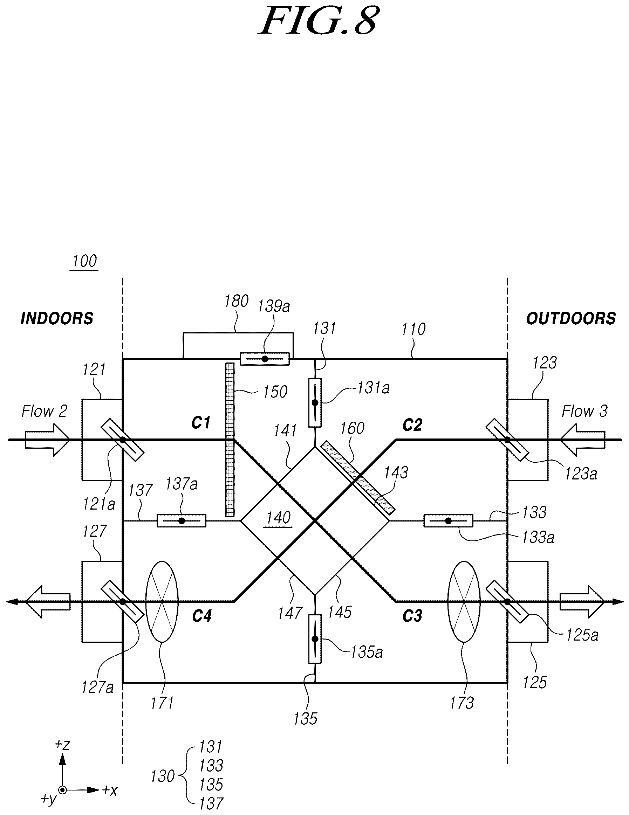

FIG. 8 illustrates air flows Flow 2 and Flow 3 during a ventilation operation (e.g., the ventilation mode of FIG. 4) in the air conditioning device 100 (e.g., the air conditioning device 100 of FIG. 1) according to an embodiment of the disclosure.

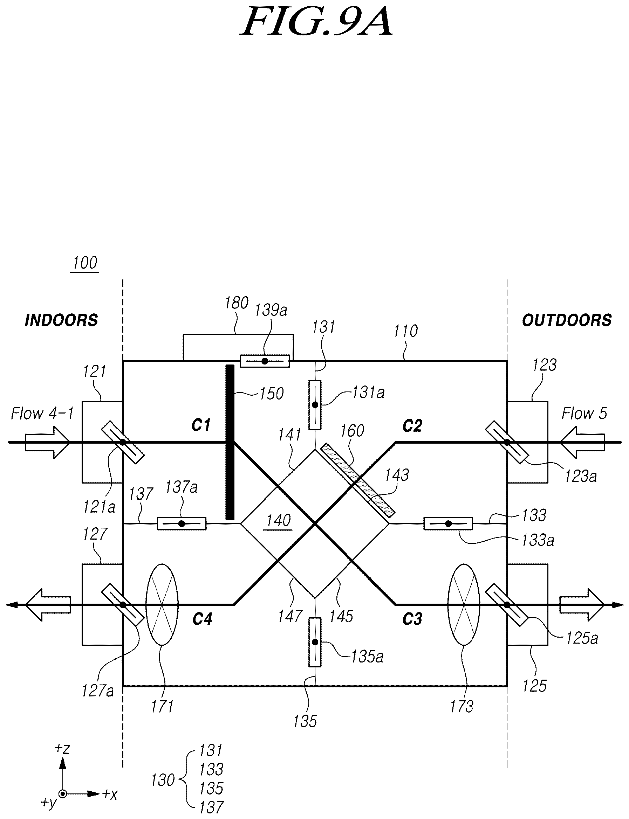

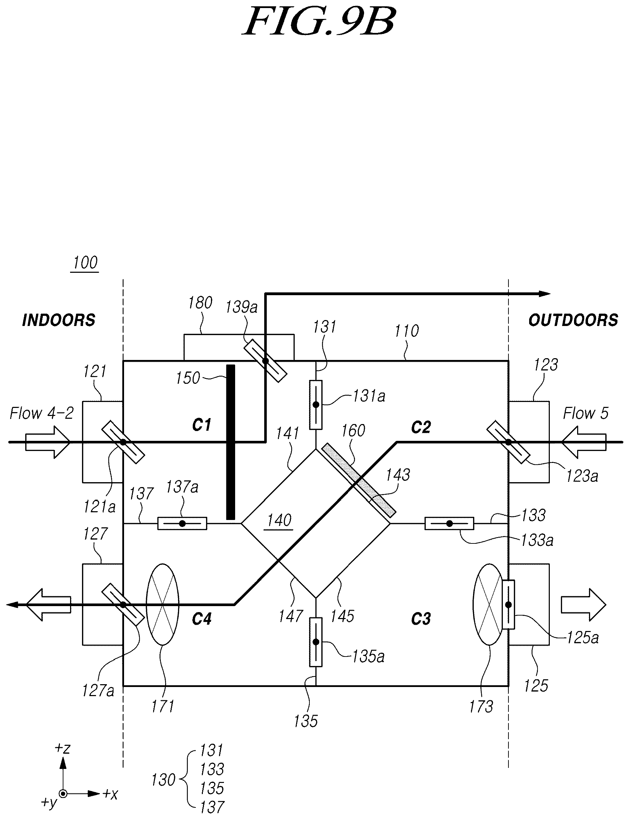

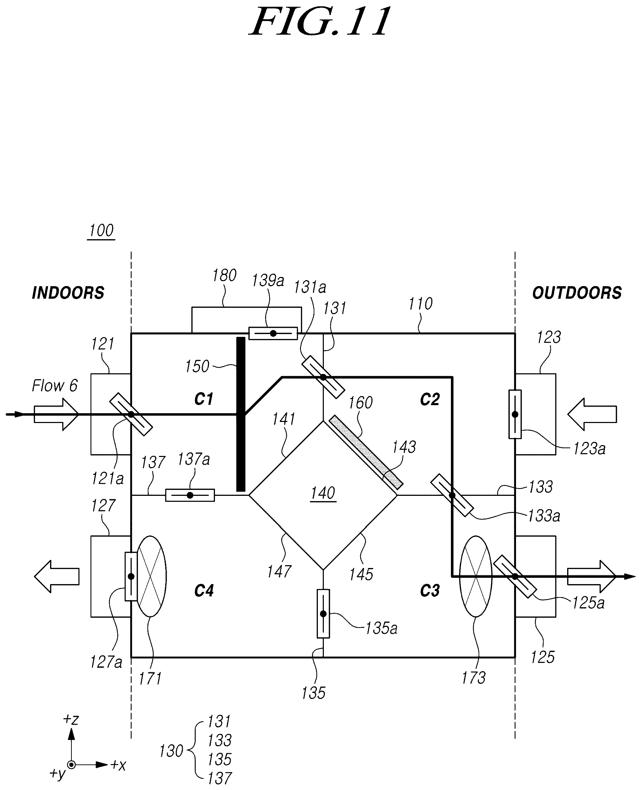

Referring to FIG. 8, compared to FIGS. 9A, 9B, and 11, an operation for discharging indoor air RA outdoors and supplying the outdoor air OA indoors without heating the first filter 150 is performed. In other words, it may be understood as a description of an operation in which the air conditioning device 100 ventilates without removing carbon dioxide adsorbed to the first filter 150 by, e.g., a method of heating the first filter 150.

According to an embodiment of the disclosure, as the first intake port 121 is opened, indoor air RA may be introduced into the air conditioning device 100. The introduced air may move from the first compartment C1 to the third compartment C3.

According to an embodiment of the disclosure, the air introduced into the air conditioning device 100 may pass through the first filter 150 provided in the first compartment C1 before reaching the third compartment C3. The air may pass through the first filter 150 and carbon dioxide in the air may be adsorbed to the first filter 150. The air passing through the first filter 150 may have a lower carbon dioxide concentration than the indoor air RA.

According to an embodiment of the disclosure, the air passing through the first filter 150 and reaching the third compartment C3 may be discharged as the exhaust air EA through the second discharge port 125. The exhaust air EA may have a lower carbon dioxide concentration than the indoor air RA.

According to an embodiment of the disclosure, as the second intake port 123 is opened, outdoor air OA may be introduced into the air conditioning device 100. The introduced air may move from the second compartment C2 to the fourth compartment C4.

According to an embodiment of the disclosure, the air introduced into the air conditioning device 100 may pass through the second filter 160 provided in the heat exchanger 140 before reaching the fourth compartment C4. The air may pass through the second filter 160, and harmful substances in the air may be adsorbed to the second filter 160. The air passing through the second filter 160 may have a lower concentration of harmful substances than the outdoor air OA.

According to an embodiment of the disclosure, the air passing through the second filter 160 and reaching the fourth compartment C4 may be supplied as the supply air EA through the first discharge port 127. The supply air SA may have a lower concentration of harmful substances than the outdoor air RA.

According to an embodiment of the disclosure, the air conditioning device 100 may ventilate indoor air by exchanging the indoor air RA and the outdoor air OA. The air conditioning device 100 may increase energy efficiency by minimizing a difference in thermal energy between the indoor air RA and the outdoor air OA through the heat exchanger 140. The air conditioning device 100 may reduce carbon dioxide discharged outdoors by adsorbing carbon dioxide present in the indoor air RA through the first filter 150.

FIG. 9A illustrates an air flow for removing carbon dioxide adsorbed to a filter during a ventilation operation in an air conditioning device 100 (e.g., the air conditioning device 100 of FIG. 1) according to an embodiment of the disclosure.

Referring to FIG. 9A, all or part of the airflows may correspond to those of FIG. 8. However, it differs from FIG. 8 in that the operation of FIG. 9A removes carbon dioxide adsorbed to the first filter 150 by heating the first filter 150 when the air conditioning device 100 performs a ventilation operation. Therefore, redundant descriptions will be omitted, and differences will be mainly described.

According to an embodiment of the disclosure, the air conditioning device 100 may heat the first filter 150 to a predetermined temperature to desorb carbon dioxide adsorbed to the first filter 150. The air conditioning device 100 may heat the first filter 150 by operating a heater (e.g., the heater unit 151 of FIG. 2). The predetermined temperature may be, e.g., 65°C to 70°C. If the air conditioning device 100 heats the first filter 150 to a predetermined temperature, carbon dioxide adsorbed to the first filter 150 may be desorbed.

According to an embodiment of the disclosure, the air conditioning device 100 may regenerate the first filter 150 by desorbing carbon dioxide adsorbed to the first filter 150. The regeneration performance of the regenerated first filter 150 may be maintained at 93%. The adsorption performance of the regenerated first filter 150 may be maintained at 98% to 99% compared to the performance before being regenerated.

According to an embodiment of the disclosure, the air conditioning device 100 may discharge carbon dioxide desorbed from the first filter 150 through the second discharge port 125.

For example, the air conditioning device 100 may open the first damper 121a provided in the first intake port 121 and may open the third damper 125a provided in the second discharge port 125. The air conditioning device 100 may operate the second blower 173.

According to an embodiment of the disclosure, the air conditioning device 100 may introduce the outdoor air OA into the air conditioning device 100 and supply the air as supply air SA indoors.

For example, the air conditioning device 100 may open the second damper 123a provided in the second intake port 123 and may open the fourth damper 127a provided in the first discharge port 127. The air conditioning device 100 may operate the first blower 171.

According to an embodiment of the disclosure, the air conditioning device 100 may discharge carbon dioxide adsorbed to the first filter 150 outdoors, purify the outdoor air OA with the second filter 160, and supply the purified outdoor air OA as the supply air SA. The air conditioning device 100 may reduce the cooling and heating load by minimizing the thermal energy difference between the indoor air RA and the outdoor air OA through the heat exchanger 140.

According to an embodiment of the disclosure, the air conditioning device 100 may simultaneously perform ventilation and regeneration of the first filter 150. The air conditioning device 100 may achieve energy reduction by minimizing a heating load that may occur in winter.

For example, when the air conditioning device 100 performs a ventilation operation in winter, if the first filter 150 is heated to desorb carbon dioxide adsorbed to the first filter 150, the air passing through the first filter 150 may be heated to a predetermined temperature (e.g., 65°C to 70°C). When the air heated to the predetermined temperature is discharged outdoors through the heat exchanger 140 by the proposed air path Flow 4-1, the outdoor air OA may be supplied indoors through the heat exchanger 140, and the outside air OA may be heated in the heat exchanger 140. Accordingly, the temperature of the indoor air RA may increase, and thus energy required for heating may be reduced.

FIG. 9B illustrates an air flow for removing carbon dioxide adsorbed to a filter during a ventilation operation in an air conditioning device 100 (e.g., the air conditioning device 100 of FIG. 1) according to an embodiment of the disclosure.

Referring to FIG. 9B, the air conditioning device 100 may heat the first filter 150 to a predetermined temperature to desorb carbon dioxide adsorbed to the first filter 150. The air conditioning device 100 may heat the first filter 150 by operating a heater (e.g., the heater unit 151 of FIG. 2). The predetermined temperature may be, e.g., 65°C to 70°C. If the air conditioning device 100 heats the first filter 150 to a predetermined temperature, carbon dioxide adsorbed to the first filter 150 may be desorbed.

According to an embodiment of the disclosure, the air conditioning device 100 may regenerate the first filter 150 by desorbing carbon dioxide adsorbed to the first filter 150. The regeneration performance of the regenerated first filter 150 may be maintained at 93%. The adsorption performance of the regenerated first filter 150 may be maintained at 98% to 99% compared to the performance before being regenerated.

According to an embodiment of the disclosure, the air conditioning device 100 may discharge carbon dioxide desorbed from the first filter 150 outdoors without passing through the heat exchanger 140. To that end, the air conditioning device 100 may open a bypass path.

For example, the air conditioning device 100 may open the first damper 121a provided in the first intake port 121, and open the ninth damper 139a provided at an upper side of the main body 110.

According to an embodiment of the disclosure, the indoor air RA may pass through the first intake port 121, pass through the first filter 150 provided in the first compartment C1, and then be discharged outdoors through the ninth damper 139a. For example, the air may be bypassed through a third discharge port (e.g., the third discharge port of FIG. 3) connected to the ninth damper 139a and discharged outdoors. To that end, the air conditioning device 100 may further include the third discharge port.

According to an embodiment of the disclosure, the air conditioning device 100 may introduce the outdoor air OA into the air conditioning device 100 and supply the air as the supply air SA indoors.

For example, the air conditioning device 100 may open the second damper 123a provided in the second intake port 123 and may open the fourth damper 127a provided in the first discharge port 127. The air conditioning device 100 may operate the first blower 171.

According to an embodiment of the disclosure, the air conditioning device 100 may discharge carbon dioxide adsorbed to the first filter 150 outdoors, purify the outdoor air OA with the second filter 160, and supply the purified outdoor air OA as the supply air SA. The air conditioning device 100 may reduce the cooling and heating load by minimizing the thermal energy difference between the indoor air RA and the outdoor air OA through the heat exchanger 140.

According to an embodiment of the disclosure, the air conditioning device 100 may simultaneously perform ventilation and regeneration of the first filter 150. The air conditioning device 100 may achieve energy reduction by minimizing a cooling load that may occur in summer.

For example, when the air conditioning device 100 performs a ventilation operation in summer, if the first filter 150 is heated to desorb carbon dioxide adsorbed to the first filter 150, the air passing through the first filter 150 may be heated to a predetermined temperature (e.g., 65°C to 70°C). When the air heated to the predetermined temperature is discharged outdoors through the heat exchanger 140 rather than the proposed air path Flow 4-2 (e.g., the air path according to Flow 4-1 of FIG. 9A), the outdoor air OA may be supplied indoors through the heat exchanger 140, and the outside air OA may be heated in the heat exchanger 140. Accordingly, the temperature of the indoor air RA may increase, and thus energy required for cooling may increase. The air conditioning device 100 may minimize an energy load required for cooling through the proposed air path Flow 4-2.

For example, it may be assumed that there are one or two occupants having a carbon dioxide emission amount of 18.7 L/h in an indoor space of 83 square meters (m²). The outdoor air volume may be assumed to be 100 cubic meter per hour (CMH). It may be assumed that the driving time interval of the air conditioning device 100 is 1 hour. It may be assumed that the performance of the adsorbent applied to the first filter 150 is 2.5 mmol/g, and the amount of the adsorbent applied to the first filter 150 is 500 g. Under the above-described conditions, the air conditioning device 100 may maintain the concentration of carbon dioxide contained in the indoor air RA at substantially 1000 ppm and at the same time reduce the ventilation rate to 0.23 ACH (air change per hour, the number of times of ventilation per hour, i.e., the number of times of exchange to clean air per hour in the recommended use area). Accordingly, the air conditioning device 100 may reduce the ventilation operation rate by about 49%. The air conditioning device 100 may provide energy reduction by reducing the ventilation operation time.

FIG. 10 is a control flowchart of a subroutine for an automatic operation (e.g., the automatic mode of FIG. 4) in an air conditioning device 100 (e.g., the air conditioning device 100 of FIG. 1) according to an embodiment of the disclosure.

Referring to FIG. 10, in operation 1010, the air conditioning device 100 may detect a concentration of indoor carbon dioxide. The air conditioning device 100 may detect the concentration of carbon dioxide contained in the indoor air RA through a gas sensor.

According to an embodiment of the disclosure, in operation 1020, the air conditioning device 100 may determine whether the indoor carbon dioxide concentration exceeds a threshold level. The threshold level may be the user's set or initially set carbon dioxide value. The threshold level may be, e.g., 1200 ppm.

According to an embodiment of the disclosure, when the indoor carbon dioxide concentration detected by the air conditioning device 100 exceeds the threshold level, the air conditioning device 100 may switch to the circulation mode and operate in operation 1030. In order to switch to the circulation mode, the air conditioning device 100 may execute the circulation mode subroutine of FIG. 5.

According to an embodiment of the disclosure, in operation 1040, the air conditioning device 100 may determine whether the indoor carbon dioxide concentration is a threshold level or less. The threshold level may be, e.g., 1000 ppm.

According to an embodiment of the disclosure, when the indoor carbon dioxide concentration is higher than the threshold level, in operation 1050, the air conditioning device 100 may determine whether the first filter (e.g., the first filter 150 of FIG. 3) is in a saturated state. The air conditioning device 100 may determine whether the first filter 150 is in the saturated state through the gas sensor that detects the concentration of the carbon dioxide collected in the first filter 150.

According to an embodiment of the disclosure, when it is determined that the indoor carbon dioxide concentration is less than or equal to the threshold level or that the first filter 150 is in the saturated state, the air conditioning device 100 may switch to the ventilation mode and operate in operation 1060. In order to switch to the ventilation mode, the air conditioning device 100 may execute the circulation mode subroutine of FIG. 7.

FIG. 11 is a front view illustrating that indoor air RA is discharged outdoors through a bypass path in an air conditioning device according to an embodiment of the disclosure. The air conditioning device 100 may discharge indoor air RA outdoors through the path Flow 6 proposed in FIG. 11. When the air conditioning device 100 discharges the indoor air RA outdoors, the air conditioning device 100 may further include a separate component so that the outdoor air OA is not introduced indoors.

Referring to FIG. 11, in the air conditioning device 100, in addition to the path illustrated in FIG. 9B, indoor air RA may be discharged outdoors without passing through the heat exchanger 140.

According to an embodiment of the disclosure, the air conditioning device 100 may desorb carbon dioxide adsorbed to the first filter 150 and discharge it outdoors.

According to an embodiment of the disclosure, the air conditioning device 100 may heat the first filter 150 to a predetermined temperature to desorb carbon dioxide adsorbed to the first filter 150. The air conditioning device 100 may heat the first filter 150 by operating a heater (e.g., the heater unit 151 of FIG. 2). The predetermined temperature may be, e.g., 65°C to 70°C. If the air conditioning device 100 heats the first filter 150 to a predetermined temperature, carbon dioxide adsorbed to the first filter 150 may be desorbed.

According to an embodiment of the disclosure, the air conditioning device 100 may regenerate the first filter 150 by desorbing carbon dioxide adsorbed to the first filter 150. The regeneration performance of the regenerated first filter 150 may be maintained at 93%. The adsorption performance of the regenerated first filter 150 may be maintained at 98% to 99% compared to the performance before being regenerated.

According to an embodiment of the disclosure, the air conditioning device 100 may discharge carbon dioxide desorbed from the first filter 150 outdoors without passing through the heat exchanger 140. To that end, the air conditioning device 100 may open a bypass path.

According to an embodiment of the disclosure, the air conditioning device 100 may open the first damper 121a provided in the first intake port 121. The air conditioning device 100 may open the fifth damper 131a provided on the first partition wall 131. The air conditioning device 100 may open the sixth damper 133a provided on the second partition wall 133. The air conditioning device 100 may open the third damper 125a provided in the second discharge port 125.

According to an embodiment of the disclosure, the indoor air RA may pass through the first intake port 121 and move from the first compartment C1 to the second compartment C2 without passing through the heat exchanger 140. The air may be guided from the second compartment C2 to the third compartment C3. The air may pass through the second discharge port 125 in the third compartment C3 and be discharged outdoors.

According to an embodiment of the disclosure, the air conditioning device 100 may include a separate opening/closing means (not shown) to prevent the indoor air RA staying in the second compartment C2 from moving to the fourth compartment C4 through the heat exchanger 140. For example, the opening/closing means may be provided near the heat exchanger 140, and preferably may be provided near the second plate 143. The opening/closing means may be implemented as a damper, but is not limited thereto, and may be implemented as a valve, an orifice, or a screen. For example, when the opening/closing means is implemented as any one of a damper, a valve, or an orifice, the air conditioning device 100 may prevent air from moving from the second compartment C2 to the fourth compartment C4 through the heat exchanger 140 by opening or closing the opening/closing means. For example, when the opening/closing means is implemented as a screen, the screen may include a material including metal or plastic to prevent fluid from passing therethrough. One end of the screen may be hinged to, e.g., one end of the second plate 143. As one end of the screen is hinged to one end of the second plate 143, the screen may block a surface of the second plate 143. The air conditioning device 100 may prevent air staying in the second compartment C2 from moving to the fourth compartment C4 through the heat exchanger 140 by allowing the screen to block the second plate 143.

According to an embodiment of the disclosure, as the air moves along the proposed path, the air conditioning device 100 may discharge the indoor air RA outdoors without supplying the outdoor air OA indoors. The air conditioning device 100 may reduce the cooling and heating load by minimizing the thermal energy difference between the indoor air RA and the outdoor air OA through the heat exchanger 140.

According to an embodiment of the disclosure, the air conditioning device 100 may discharge the indoor air RA outdoors without supplying the outdoor air OA indoors. In discharging the indoor air RA outdoors, the air conditioning device 100 may heat the first filter 150 to remove carbon dioxide adsorbed to the first filter 150 and regenerate the first filter 150.

According to an embodiment of the disclosure, the air conditioning device 100 may simultaneously perform ventilation and regeneration of the first filter 150. The air conditioning device 100 may achieve energy reduction by minimizing a cooling load that may occur in summer.

An air conditioning device 100 according to an embodiment of the disclosure may include a main body 110. The air conditioning device 100 may be provided with a first intake port 121 and a first discharge port 127 on one side 111 facing indoors. The air conditioning device 100 may be provided with a second intake port 123 and a second discharge port 125 on another side 113 facing outdoors. The air conditioning device 100 may include a main body 110 configured to form an air passage from the first intake port 121 to either the first discharge port 127 or the second discharge port 125 based on an operation state. The main body 110 may include a carbon dioxide suction filter 150 provided in a section where a first air passage connecting the first intake port 121 and the first discharge port 127 and a second air passage connecting the first intake port 121 and the second discharge port 127 are common. The main body 110 may include a heater 251 configured to heat the carbon dioxide suction filter 150 to a predetermined temperature in a ventilation operation state of discharging indoor air RA outdoors and supplying outdoor air OA indoors.

In the air conditioning device 100 according to an embodiment of the disclosure, a suction capacity of the carbon dioxide suction filter 150 may be 1.5 mmol/g to 2.5 mmol/g.

The air conditioning device 100 according to an embodiment of the disclosure may include a first damper 121a configured to open or close the first intake port 121. The air conditioning device 100 may include a second damper 127a configured to open or close the first discharge port 127. The air conditioning device 100 may include a third damper 123a configured to open or close the second intake port 123. The air conditioning device 100 according to an embodiment of the disclosure may include a fourth damper 125a configured to open or close the second discharge port 125.

In the air conditioning device 100 according to an embodiment of the disclosure, the heater 251 may be configured to heat the carbon dioxide suction filter 150 to 65°C to 70°C.

In the air conditioning device 100 according to an embodiment of the disclosure, the carbon dioxide suction filter 150 may include an adsorbent composed of a material in which carbon nanofibers, nanoparticles, and an amine group are combined at a predetermined component ratio.

In the air conditioning device 100 according to an embodiment of the disclosure, the carbon nanofibers may include carbon nanotubes (CNTs) or graphene nanofibers (GNFs).

In the air conditioning device 100 according to an embodiment of the disclosure, the nanoparticles may include silicon dioxide (SiO₂), aluminum oxide (Al₂O₃), iron oxide (Fe₃O₄), or titanium dioxide (TiO₂).

In the air conditioning device 100 according to an embodiment of the disclosure, the amine group may include polyethylenimine PEI, 3-aminopropyl triethoxysilane, tetraethylenepentamine, or diethylenetriamine.

In the air conditioning device 100 according to an embodiment of the disclosure, a molecular weight of the amine group may meet 600 to 25,000.

In the air conditioning device 100 according to an embodiment of the disclosure, the material constituting the adsorbent may have a bead shape through a phase inversion method.

In the air conditioning device 100 according to an embodiment of the disclosure, the carbon dioxide suction filter 150 may include an adsorbent formed of a material in which an amine group is bonded to at least one synthetic resin-based adsorbent.

In the air conditioning device 100 according to an embodiment of the disclosure, the material constituting the adsorbent may have a capsule form through a phase inversion method.

A method for driving an air conditioning device 100 according to an embodiment of the disclosure may include determining 410, 420 an operation type. The driving method may include selecting 440 a ventilation operation for discharging indoor air and supplying outdoor air among the operation types and heating 720 a carbon dioxide suction filter 150 to a predetermined temperature. The driving method may include discharging indoor air outdoors and supplying outdoor air indoors.

The method for driving the air conditioning device 100 according to an embodiment of the disclosure may include forming the discharge passage Flow 4-1 by opening a first intake port 121 and a second discharge port 125 in response to determining that the operation type is the ventilation operation 440.

The method for driving the air conditioning device 100 according to an embodiment of the disclosure may include forming the discharge passage Flow 4-2 by opening a first intake port 121 and a third discharge port and opening a ninth damper 139a connecting a passage between a first compartment C1 and the third discharge port in response to determining that the operation type is the ventilation operation 440.

In the method for driving the air conditioning device 100 according to an embodiment of the disclosure, the predetermined temperature may be 65°C to 70°C.

The method for driving the air conditioning device 100 according to an embodiment of the disclosure may include forming 510, 520, 530, 540, 550 an air flow Flow 1 so that adsorbed indoor air passes through the carbon dioxide suction filter and is purified and is then discharged indoors in response to determining that the operation type is a circulation operation 430.

In the method for driving the air conditioning device 100 according to an embodiment of the disclosure, forming the air flow Flow 1 may include opening 510 a first intake port 121. Forming the air flow Flow 1 may include closing 520 a second discharge port 125. Forming the air flow Flow 1 may include opening 530 a passage between a second compartment C2 and a third compartment C3. Forming the air flow Flow 1 may include closing 540 a second intake port 123. forming the air flow Flow 1 may include opening 550 a first discharge port 127.

The method for driving the air conditioning device 100 according to an embodiment of the disclosure may include detecting 1010 an indoor carbon dioxide concentration in response to determining that the operation type is an operation 460 for automatically driving the air conditioning device 100. The driving method may include, if the carbon dioxide concentration exceeds a first threshold level, determining 1030 that the operation type is the circulation operation.

In the method for driving the air conditioning device 100 according to an embodiment of the disclosure, the first threshold level may be 1200 ppm.

The method for operating the air conditioning device 100 according to an embodiment of the disclosure may include, if the carbon dioxide concentration is a second threshold level or less or if a suction capacity of the carbon dioxide suction filter is exceeded, determining 1060 that the operation type is the ventilation operation.

In the method for driving the air conditioning device 100 according to an embodiment of the disclosure, the second threshold level may be 1000 ppm.

In the method for driving the air conditioning device 100 according to an embodiment of the disclosure, the second threshold level may be relatively lower than the first threshold level.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An air conditioning device (100), comprising a main body (110) provided with a first intake port (121) and a first discharge port (127) on one side (111) facing indoors and a second intake port (123) and a second discharge port (125) on another side (113) facing outdoors, and configured to form an air passage from the first intake port (121) to one of the first discharge port (127) or the second discharge port (125) based on an operation state, wherein the main body (110) includes:
a carbon dioxide suction filter (150) provided in a section where a first air passage connecting the first intake port (121) and the first discharge port (127) and a second air passage connecting the first intake port (121) and the second discharge port (127) are common; and
a heater (251) configured to heat the carbon dioxide suction filter (150) to a predetermined temperature in a ventilation operation state of discharging indoor air (RA) outdoors and supplying outdoor air (OA) indoors.

2. The air conditioning device (100) of claim 1, wherein a suction capacity of the carbon dioxide suction filter (150) is 1.5 mmol/g to 2.5 mmol/g.

3. The air conditioning device (100) of claim 1, further comprising:
a first damper (121a) configured to open or close the first intake port (121);
a second damper (127a) configured to open or close the first discharge port (127);
a third damper (123a) configured to open or close the second intake port (123); or
a fourth damper (125a) configured to open or close the second discharge port (125).

4. The air conditioning device (100) of any one of claims 1 to 3, wherein the heater (251) is configured to heat the carbon dioxide suction filter (150) to 65°C to 70°C.

5. The air conditioning device (100) of any one of claims 1 to 4, wherein the carbon dioxide suction filter (150) includes a adsorbent composed of a material in which carbon nanofibers, nanoparticles, and an amine group are combined at a predetermined component ratio,
wherein the carbon nanofibers include carbon nanotubes (CNTs) or graphene nanofibers (GNFs),
wherein the nanoparticles include silicon dioxide (SiO₂), aluminum oxide (Al₂O₃), iron oxide (Fe₃O₄), and titanium dioxide (TiO₂), and
wherein the amine group includes polyethylenimine (PEI), 3-aminopropyl triethoxysilane, tetraethylenepentamine, or diethylenetriamine.

6. The air conditioning device (100) of claim 5, wherein a molecular weight of the amine group meets 600 to 25,000.

7. The air conditioning device (100) of claim 5, wherein the material constituting the adsorbent has a bead shape through a phase inversion method.

8. The air conditioning device (100) of any one of claims 1 to 7, wherein the carbon dioxide suction filter (150) includes an adsorbent formed of a material in which an amine group is bonded to at least one synthetic resin-based adsorbent, and
wherein the material constituting the adsorbent has a capsule form through a phase inversion method.

9. A method for driving an air conditioning device (100), the method comprising:
determining (410, 420) an operation type; and
heating (720) a carbon dioxide suction filter (150) provided in a discharge passage discharging indoor air outdoors to a predetermined temperature in response to determining that the operation type is a ventilation operation (440) for discharging the indoor air outdoors and supplying outdoor air indoors.

10. The method of claim 9, further comprising forming the discharge passage (Flow 4-1) by opening a first intake port (121) and a second discharge port (125) in response to determining that the operation type is the ventilation operation (440).

11. The method of claim 9, further comprising forming the discharge passage (Flow 4-2) by opening a first intake port (121) and a third discharge port and opening a ninth damper (139a) connecting a passage between a first compartment (C1) and the third discharge port in response to determining that the operation type is the ventilation operation (440).

12. The method of claim 9, further comprising forming (510, 520, 530, 540, 550) an air flow (Flow 1) so that adsorbed indoor air passes through the carbon dioxide suction filter and is purified and is then discharged indoors in response to determining that the operation type is a circulation operation (430).

13. The method of claim 12, wherein forming the air flow (Flow 1) includes:
opening (510) a first intake port (121);
closing (520) a second discharge port (125);
opening (530) a passage between a second compartment (C2) and a third compartment (C3);
closing (540) a second intake port (123); and
opening (550) a first discharge port (127).

14. The method of claim 12, further comprising:
detecting (1010) an indoor carbon dioxide concentration in response to determining that the operation type is an operation (460) for automatically driving the air conditioning device (100); and
when the carbon dioxide concentration exceeds a first threshold level, determining (1030) that the operation type is the circulation operation.

15. The method of claim 14, further comprising, when the carbon dioxide concentration is a second threshold level or less or when a suction capacity of the carbon dioxide suction filter is exceeded, determining (1060) that the operation type is the ventilation operation,
wherein the second threshold level is relatively lower than the first threshold level.
